(19) Europäisches Patentamt
European Patent Office
Office européen des brevets

(11) Veröffentlichungsnummer: **0 256 020 B1**

(12) **EUROPÄISCHE PATENTSCHRIFT**

(45) Veröffentlichungstag der Patentschrift: **14.11.90**

(51) Int. Cl.$^5$: **C 09 D 5/44**, C 08 G 59/04, C 08 G 59/14

(21) Anmeldenummer: **86903340.7**

(22) Anmeldetag: **17.05.86**

(86) Internationale Anmeldenummer: **PCT/EP86/00302**

(87) Internationale Veröffentlichungsnummer: **WO 86/07082 04.12.86 Gazette 86/26**

# (54) WASSERVERDÜNNBARE BINDEMITTEL FÜR KATIONISCHE ELEKTROTAUCHLACKE UND VERFAHREN ZU IHRER HERSTELLUNG.

(30) Priorität: **24.05.85 DE 3518732**

(43) Veröffentlichungstag der Anmeldung: **24.02.88 Patentblatt 88/08**

(45) Bekanntmachung des Hinweises auf die Patenterteilung: **14.11.90 Patentblatt 90/46**

(84) Benannte Vertragsstaaten: **AT BE CH DE FR GB IT LI NL SE**

(56) Entgegenhaltungen:
**EP-A-0 154 724**
**FR-A-2 338 297**
**US-A-3 936 405**
**US-A-4 260 720**

(73) Patentinhaber: **BASF Lacke + Farben Aktiengesellschaft**
**Postfach 61 23**
**D-4400 Münster (DE)**

(72) Erfinder: **DOBBELSTEIN, Arnold**
**Emil-Nolde-Weg 95**
**D-4400 Münster (DE)**
Erfinder: **GEIST, Michael**
**Rubensstrasse 251**
**D-4400 Münster (DE)**
Erfinder: **OTT, Günther**
**Von-Holte-Strasse 101 a**
**D-4400 Münster (DE)**
Erfinder: **SCHÖN, Georg**
**Schillerstrasse 2**
**D-4416 Everswinkel (DE)**

**EP 0 256 020 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Erfindung betrifft wasserverdünnbare Bindemittel für kationische Elektrotauchlacke auf der Basis von modifizierten Epoxidharzen, die Ammonium-, Sulfonium- und/oder Phosphoniumgruppen enthalten.

Die kationische Elektrotauchlackierung ist ein vor allem zum Grundieren häufig angewandtes Lackierverfahren, bei dem wasserverdünnbare kationische Gruppen tragende Kunstharze mit Hilfe von gleichstrom auf elektrisch leitende Körper aufgebracht werden.

Die Verwendung modifizierter Epoxidharze als Bindemittel für kationische Elektrotauchlacke ist bekannt. (US—PS 4,104,147, US—PS 4,260,720).

Die bisher für einen Einsatz in kationischen Elektrotauchlacken zur Verfügung stehenden modifizierten Epoxidharze sind mit aliphatischen Kohlenwasserstoffen nur schlecht verträglich, in ihrer Elastizität noch verbesserungsbedürftig und führen zu Schichten, die nicht problemlos überlackiert werden können und in ihrer Dicke noch weiter erhöht werden sollten.

Eine Aufgabe der vorliegenden Erfindung bestand darin, neue modifizierte Epoxidharze zu entwickeln, die frei von den oben aufgezeigten Nachteilen sind.

Die Aufgabe wurde erfindungsgemäß dadurch gelöst, daß Bindemittel entwickelt wurden, die dadurch gekennzeichnet sind, daß sie hergestellt worden sind durch

a) eine bei 100 bis 195°C, gegebenenfalls in Anwesenheit eines Katalysators durchgeführten durch einen monofunktionell reagierenden Starter, der entweder eine alkoholische OH-Gruppe, eine phenolische OH-Gruppe oder eine SH-Gruppe trägt, initiierten Polyaddition einer Diepoxidverbindung und/oder eines Gemisches von Diepoxidverbindungen, gegebenenfalls zusammen mit mindestens einer Monoepoxidverbindung, zu einem Epoxidharz, in dem Diepoxidverbindung und Starter in einem Molverhältnis von >2:1 bis 10:1 eingebaut sind, und anschließender

b) Modifizierung des aus a) erhaltenen Epoxidharzes mit

A) einem primären und/oder sekundären Amin oder deren Salzen und/oder dem Salz eines tertiären Amins, einer Sulfid/Säure- oder Phosphin/Säuremischung oder einem Gemisch aus diesen Verbindungen sowie gegebenenfalls mit

B) einem polyfunktionellen Alkohol, einer Polycarbonsäure, einem Polyamin, einem Polysulfid, einem Polyphenol oder einem gemisch aus diesen Verbindungen und gegebenenfalls

c) Protonisierung mit einer wasserlöslichen Säure.

Es wurde gefunden, daß die durch die obenbeschriebene Polyaddition und nachfolgende Modifizierung mit der Komponente A) hergestellten modifizierten Epoxidharze sich durch gute Verträglichkeit mit aliphatischen Kohlenwasserstoffen und hohe Elastizität auszeichnen. Ihr Einsatz als Bindemittel in kationischen Elektrotauchlacken führt zur Abscheidung von dicken Schichten, die gut überlackiert werden können.

Durch zusätzliche Umsetzung mit der Komponente B kann eine weitere Erhöhung der Elastizität der modifizierten Epoxidharze und auch eine zusätzliche Steigerung in der Dicke der abgeschiedenen Schichten erreicht werden.

Die neuen modifizierten Epoxidharze haben außerdem den Vorteil, daß sie aus leicht zugänglichen Rohstoffen hergestellt werden können.

Als Diepoxidverbindungen können alle Verbindungen eingesetzt werden, die zwei reaktive Epoxidgruppen enthalten und ein Epoxidäquivalentgewicht unter 500 aufweisen.

Besonders bevorzugte Epoxidverbindungen sind aus Polyphenolen und Epihalohydrinen hergestellte Diglycidylether von Polyphenolen. Als Polyphenole können zum Beispiel eingesetzt werden:
Ganz besonders bevorzugt: Bisphenol A und Bisphenol F
Besonders bevorzugt: 1,1-Bis-(4-hydroxyphenyl)n-heptan
Außerdem sind auch 4,4'-Dihydroxybenzophenon, Bis-(4-hydroxyphenyl)-1,1-ethan, Bis-(4-hydroxyphenyl) 1,1-isobutan, Bis-(4-hydroxy-tertiär-butylphenyl)-2,2-propan, Bis-(2-hydroxynaphtyl)methan, 1,5 Dihydroxynaphtalin und phenolische Novolakharze geeignet.

Bevorzugte Epoxidverbindungen sind auch Diglycidylether von mehrwertigen Alkoholen, wie Ethylenglykol, Diethylenglykol, triethylenglykol, 1,2-Propylenglykol, 1,4-Propylenglykol, 1,5-Pentandiol, 1,2,6-Hexantriol, Glycerin und Bis-(4-hydroxycyclohexyl)-2,2-propan.

Es können auch Diglycidylester von Polycarbonsäuren, wie zum Beispiel Oxalsäure, Bernsteinsäure, Glutarsäure, Terephthalsäure, 2,6-Naphtalindicarbonsäure, dimerisierter Linolensäure usw., eingesetzt werden. Typische Beispiele sind Glycidyladipat und Glycidylphthalat.

Ferner sind Hydantoinepoxide, epoxidiertes Polybutadien und Diepoxidverbindungen geeignet, die man durch Epoxidierung einer olefinisch ungesättigten alicyclischen Verbindung erhält.

Neben den Diepoxidverbindungen können auch Monoepoxidverbindungen als zusätzliche Ausgangssubstanzen für die Polyaddition eingesetzt werden.

Prinzipiell sind alle Verbindungen, die nur eine epoxidgruppe enthalten, geeignet.

Bevorzugt eingesetzte Monoepoxidverbindungen sind z.B. Phenylglycidylether, Versaticsäureglycidylester und (Meth)acrylsäureglycidylester.

Als Starter können alle Verbindungen eingesetzt werden, die unter den zu Beginn der Polyaddition

herrschenden Reaktionsbedingungen monofunktionell reagieren und entweder eine alkkoholische OH-Gruppe, eine phenolische OH-Gruppe oder eine SH-Gruppe enthalten.

Die verwendeten Starter können Verbindungen der allgemeinen Formel

$$R^1—OH$$

wobei $R^1$ folgende Bedeutung haben kann

$R^1$ = Alkyl- (bevorzugt mit 1 bis 20 C-Atomen, besonders bevorzugt Methyl-, Ethyl-, (Iso-) Propyl-, (Iso-) Butyl-, (Iso-) Amyl-, 2-Ethylbutyl-, 2-Ethylhexyl-, Isononyl-, Isodecyl-, Isotridecyl-, Isohexadecyl-, Isooctadecyl-, Neopentyl-, 3,7 Dimethyloctyl(3)-, 3-Cyclohexylpropyl-, 2,4-Dimethylpentyl(3)-).
= Alkenyl (besonders bevorzugt 1-Butenyl-(3)-, 2-Methylbuten (3)yl(2)-, 3-Methylpenten (1)yl(3)
= $R^2—X—R^3—$, wobei
$R^2$ = Alkyl- (mit 1 bis 6 C-Atomen, bevorzugt Methyl-, Ethyl-, Butyl-, Hexyl-) oder Phenyl-
$R^3$ = $CH_2CH_2—(OCH_2—CH_2)n—$ mit n = 0 bis 10, insbesondere 0,1 und 2), Propyl-, Butyl-
x = O oder S
= Cycloalkyl, besonders bevorzugt Cyclohexyl, bevorzugt 4-t-Butylcyclohexyl
= Aryl, besonders bevorzugt

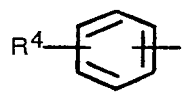 mit

$R^4$ = H, Alkyl- (bevorzugt mit 1 bis 20 C-Atomen, besonders bevorzugt t-Butyl-, Nonyl- und Dodecyl-)
$R^4$ = $R^5—O—$ (bevorzugt in p-Stellung zur phenolischen OH-Gruppe) mit $R^5$ = Alkyl (bevorzugt mit 1—10 C-Atomen, besonders bevorzugt Methyl)
$R^1$ = Aralkyl, bevorzugt Benzyl-, 4-Methylbenzyl-, Phenylethyl-, 2-Phenylpropyl-(1)-
oder eine Verbindung der allgemeinen Formel $R^6—SH$, wobei $R^6$ folgende Bedeutung haben kann
$R^6$ = Alkyl (bevorzugt mit 1 bis 20 C-Atomen, besonders bevorzugt n-Butyl- und Dodecyl-)
= $R^7—OOC(CH_2)_n—$ mit n = 1,2 und $R^7$ = Alkylrest mit 1 bis 8 C-Atomen (bevorzugt Butyl, 2-Ethyl-hexyl)
= Cycloalkyl-, besonders bevorzugt Cyclohexyl
= Aryl-, besonders bevorzugt Phenyl-
= Aralkyl-, besonders bevorzugt Benzyl-
oder ein Gemisch aus diesen Verbindungen sein.

Außerdem können auch minofunktionelle Präpolymere, wie z.B. Umsetzungsprodukte einer der obenerwähnten monofunktionellen Verbindungen mit Lactonen, wie z.B. ε-Caprolacton, als Starter verwendet werden.

Als Komponente A können primäre oder sekundäre Amine bzw. deren Salze, Salze von tertiären Aminen, Sulfid/Säure- oder Phosphin/Säuremischungen oder ein Gemisch aus diesen Verbindungen eingesetzt werden, wobei die sekundären Amine besonders bevorzugte a-Komponenten sind.

Bevorzugt sollte das Amin eine in Wasser lösliche Verbindung sein. Beispiele solcher Amine sind Mono- und Dialkylamine, wie Methylamin, Ethylamin, Propylamin, Butylamin, Dimethylamin, Diethylamin, Dipropylamin, Methylbutylamin und dergleichen. Geeignet sind ebenfalls Alkanolamine wie zum Beispiel Methylethanolamin, Diethanolamin und dergleichen. Ferner sind Dialkylaminoalkylamine, wie zum Beispiel Dimethylaminoethylamin, Diethylaminopropylamin, Dimethylaminopropylamin und dergleichen geeignet.

In den meisten Fällen werden niedermolekulare Amine verwendet, doch ist es möglich, höhermolekulare Monoamine anzuwenden.

Polyamine mit primären und sekundären Aminogruppen können in Form ihrer Ketimine mit den Epoxidgruppen umgesetzt werden. Die ketimine werden aus den Polyaminen in bekannter Weise hergestellt.

Die Amine können auch noch andere Gruppen enthalten doch sollen diese die Umsetzung des Amins mit der Epoxygruppe nicht stören und auch nicht zu einer Gelierung der Reaktionsmischung führen.

Die für die Wasserverdünnbarkeit und elektrsiche Abscheidung erforderlichen Ladungen können durch Protonisierung mit wasserlöslichen Säure (z.B. Borsäure, Ameisensäure, Milchsäure, Propionsäure, Buttersäure, Salzsäure, Phosporsäure, Schwefelsäure, Kohlensäure, bevorzugt Essigsäure) oder auch durch Umsetzung der Oxirangruppen mit Salzen eines Amins oder einer Sulfid/Säure- oder Phosphin/Säure-Mischung erzeugt werden.

Als Salz eines Amins kann das Salz eines tertiären Amins verwendet werden.

Der Aminanteil des Amin-Säuresalzes ist ein Amin, das unsubstituiert oder substituiert wie im Falle des Hydroxylamins sein kann, wobei diese Substituenten die Umsetzung des Amin-Säuresalzes mit dem Polyepoxid nicht stören sollen und die Reaktionsmischung nicht gelieren soll. Bevorzugte Amine sind tertiäre Amine, wie Dimethylethanolamin, Triethylamin, Trimethylamin, Triisopropylamin und dergleichen. Beispiele von anderen geeigneten Aminen sind in der US—PS 3 839 525 in Spalte 5, Zeile 3 bis Spalte 7, Zeile 42 angegeben.

Die Amin-Säuresalzmischung wird durch Umsetzung des Amins mit der Säure in bekannter Weise

erhalten. Es können auch Amin-Säuremischungen verwendet werden, obwohl sie in der Regel unter Bildung des Säuresalzes reagieren.

Eine Umsetzung der Oxirangruppen mit einem Sulfid in Gegenwart einer Säure führt zu Harzen mit Sulfoniumgruppen.

Als Sulfide können beliebige Sulfide verwendet werden, die mit Epoxygruppen reagieren und keine Gruppen enthalten, die die Umsetzung stören. Das Sulfid kann ein aliphatisches, gemischtes aliphatisch aromatisches, aralkylisches oder cyclisches Sulfid sein. Beispiele von solchen Sulfiden sind Dialkylsulfid, wie Diethylsulfid, Dipropylsulfid, Dibutylsulfid, Dihexylsulfid oder Alkylphenylsulfide, wie Diphenylsulfid, Ethylphenylsulfid, alicyclische Sulfide, wie Tetramethylensulfid, Pentamethylensulfid, Hydroxyalkylsulfide, wie Thiodiethanol, Thiodipropanol, Thiodibutanol und dergleichen.

Als Säure kann eine beliebige Säure verwendet werden, die ein tertiäres Sulfoniumsalz bildet. Bevorzugt ist die Säure aber eine organische Carbonsäure. Beispiele von geeigneten Säuren sind Borsäure, Ameisensäure, Milchsäure, Essigsäure, Propionsäure, Buttersäure, Salzsäure, Phosphorsäure und Schwefelsäure. Die Säure hat bevorzugt eine Dissoziationskonstante von größer als etwa $1 \times 10^{-5}$.

Das Verhältnis von Sulfid zu Säure ist nicht besonders kritisch. Da ein Äquivalent Säure für die Bildung eines Mols einer Sulfoniumgruppe verwendet wird, wird bevorzugt mindestens ein Äquivalent Säure für jedes gewünschte Mol der Umwandlung von Sulfid zu Sulfonium verwendet.

Eine Umsetzung der Oxirangruppen mit einem Phosphin in Gegenwart einer Säure führt zu Harzen mit Phosphoniumgruppen.

Das verwendete Phosphin kann ein beliebiges Phosphin sein, das keine störenden Gruppen enthält. Beispiele solcher Phosphine sind aliphatische, aromatische oder alicyclische Phosphine, wobei als spezifische Beispiele folgende Phosphine genannt seien:

Niedrige Trialkylphosphine, wie Trimethylphosphin, Triethylphosphin, Tripropylphosphin, Tributylphosphin, gemischte niedrige Alkylphenylphosphine, wie Phenyldimethylphosphin, Phenyldiethylphosphin, Phenyldipropylphosphin, Diphenylmethylphosphin, Diphenylethylphosphin, Diphenylpropylphosphin, Triphenylphospin, alicyclische Phosphine, wie Tetramethylenethylphosphin und dergleichen.

Die verwendete Säure kann eine beliebige Säure sein, die ein quaternäres Phosphoniumsalz bildet. Bevorzugt ist die Säure aber eine organische Carbonsäure. Beispiele von geeigneten Säuren sind Borsäure, Milchsäure, Ameisensäure, Essigsäure, Propionsäure, Buttersäure, Salzsäure, Phosphorsäure und Schwefelsäure.

Die Säure soll bevorzugt eine Dissoziationskonstante von größer als etwa $10^{-5}$ haben.

Das Verhältnis von Phosphin zur Säure ist nicht besonders kritisch. Da ein Äquivalent Säure zur Bildung von einem Mol Phosphoniumgruppe erforderlich ist, wird bevorzugt mindestens etwa ein Äquivalent Säure für jedes Mol der gewünschten Umwandlung von Phosphin zu Phosphonium verwendet.

Die als Komponente B geeigneten geeigneten polyfunktionellen Alkohole, Polycarbonsäuren, Polyamine oder Polysulfide haben ein Molekulargewicht von 300 bis 3 500, bevorzugt von 350 bis 1 000.

Die bei der Erfindung in Betracht kommenden Polyole schließen Diole, Triole und höhere polymere Polyole, wie Polyesterpolyole, Polyetherpolyole, ein.

Für die Komponente B geeignete Polyalkylenetherpolyole entsprechen der allgemeinen Formel:

$$H-\left[O-(CHR)_n\right]_m-OH$$

in der R = Wasserstoff oder ein niedriger Alkylrest, gegebenenfalls mit verschiedenen Substituenten, ist, n = 2 bis 6 mit m = 3 bis 50 oder noch höher ist. Beispiele sind Poly(oxytetramethylen)glykole und Poly(oxyethylen)glykole.

Die bevorzugten Polyalkylenetherpolyole sind Poly(oxytetramethylen)glykole mit einem Molekulargewicht im Bereich von 350 bis 1 000.

Polyesterpolyole können ebenfalls als polymere Polyolkomponente (Komponente B) bei der Erfindung verwendet werden. Man kann die Polyesterpolyole durch Polyveresterung von organischen Poloycarbonsäuren oder ihren Anhydriden mit organischen Polyolen, die primäre Hydroxylgruppen enthalten, herstellen. Üblicherweise sind die Polycarbonsäuren und die Polyole aliphatische oder aromatische Dicarbonsäuren und Diole.

Die zur Herstellung der Polyester verwendeten Diole schließen Alkylenglykole, wie Ethylenglykol, Butylenglykol, Neopentylglykol und andere Glykole, wie Cyclohexandimethanol, ein.

Die Säurekomponente des Polyesters besteht in erster Linie aus niedermolekularen Carbonsäuren oder ihren Anhydriden mit 2 bis 18 Kohlenstoffatomen im Molekül. Geeignete Säuren sind beispielsweise Phthalsäure, Isophthalsäure, Terephthalsäure, Tetrahydrophthalsäure, Hexahydrophthalsäure, Adipinsäure, Azelainsäure, Sebazinsäure, Maleinsäure und Glutarsäure. Anstelle dieser Säuren können auch ihre Anhydride, soweit diese existieren, verwendet werden.

Ferner lassen sich bei der Erfindung auch Polyesterpolyole, die sich von Lactonen ableiten, als Komponente B benutzen. Diese Produkte erhält man durch die Umsetzung eines ε-Caprolactons mit einem Polyol. Solche Produkte sind in der US—PS 3 169 945 beschrieben.

Die Polylactonpolyole, die man durch diese Umsetzung erhält, zeichnen sich durch die Gegenwart einer endständigen Hydroxylgruppe und durch wiederkehrende Polyesteranteile, die sich von dem Lacton ableiten, aus. Diese wiederkehrenden Molekülanteile können der Formel

$$-\overset{\overset{\displaystyle O}{\|}}{C}-(CHR)_n-CH_2O-$$

entsprechen, in der n mindestens 4, bevorzugt 4 bis 6, ist und der Substituent Wasserstoff, ein Alkylrest, ein Cycloalkylrest oder ein Alkoxyrest ist.

In einer weiteren vorteilhaften Ausgestaltung der Erfindung werden langkettige Dicarbonsäuren eingesetzt. Beispiele hierfür sind Dimerfettsäuren, wie etwa die dimere Linolsäure.

Geeignete Polyamine zur Elastifizierung kann man z.B. durch Umsetzung von primären Diaminen und Monoepoxiden darstellen. Die gebildeten sekundären, substituierten Diamine modifizieren die erfindungsgemäßen Epoxidharze in geeigneter Weise.

Als Komponente B können auch primär-tertiäre Diamine oder Alkanolamine, wie Aminoethanol oder Aminopropanol, verwendet werden.

Als polyfunktionelle SH-Verbindungen (Komponente B) kommen Umsetzungsprodukte von organischen Dihalogeniden mit Natriumpolysulfid in Betracht. Weitere SH-Verbindungen sind z.B. Umsetzungsprodukte von hydroxylgruppenhaltigen linearen Polyestern, Polyethern oder Polyurethanen mit Mercaptocarbonsäuren, wie Mercaptoessigsäure, 2-Mercaptopropionsäure, 3-Mercaptopropionsäure, Mercaptobuttersäure und ähnliche.

Als Komponente B geeignete Polyphenole entsprechen der oben erläuterten allgemeinen Formel (I)

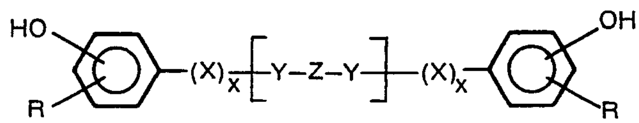

(I)

Diese Komponente B kann zum Beispiel vorteilhaft auf folgende Weise hergestellt werden. Ein Mol eines höhermolekularen Diols, z.B. eines Polyesterdiols, eines Polycaprolactondiols, eines Polyetherdiols, eines Polycarbonatdiols oder dergleichen, wird mit zwei Molen einer Hydroxyphenylcarbonsäure verestert oder mit zwei Molen eines Hydroxyphenylcarbonsäureesters umgesetzt. Geeignete Hydroxycarbonsäuren sind p-Hydroxybenzoesäure, p-Hydroxyphenylessigsäure und 3-(4-Hydroxyphenyl-)propionsäure oder deren Ester. Wird das Anhängen der Hydroxyphenylgruppe durch Umesterung durchgeführt, kann man auch eine basische Umesterung durchführen und hierzu die Alkaliphenolate der entsprechenden Hydroxyphenylcarbonsäureester einsetzen. Nach Reaktionsende muß das Produkt sauer verarbeitet werden, um das gewünschte Polyphenol zu erhalten.

Zur direkten Veresterung kann zum Beispiel auch N-(4-Hydroxyphenol-)glycin eingesetzt werden. In einer weiteren Variante können beliebige, sauer Polyester mit p-Hydroxyanilin zu den erwünschten Polyphenolen umgesetzt werden.

In einer anderen vorteilhaften Ausgestaltung werden Polyetherdiamine oder ähnliche Polyamine mit z.B. 4-Hydroxy-3-meth-oxybenzaldehyd zu den Polyphenolen umgesetzt.

Die erfindungsgemäß hergestellten Bindemittel können nach an sich bekannte Methoden durch Zusatz von Vernetzungsmitteln vernetzt bzw. durch chemische Modifikation in selbstvernetzende Systeme überführt werden.

Ein selbstvernetzendes System kann zum Beispiel dadurch erhalten werden, daß das Bindemittel mit einem teilblockierten Polyisocyanat, das im Durchschnitt eine freie Isocyanatgruppe pro Molekül besitzt und dessen blockierte Isocyanatgruppen erst bei erhöhten Temperaturen entblockt werden, umgesetzt wird.

Als Vernetzungsmittel eignen sich praktisch alle mit Oxirangruppen reagierende, mindestens bifunktionelle Verbindungen, wie zum Beispiel Polyalkohole, Polyphenole, Polycarbonsäuren, Polycarbonsäureanhydride und -amide, Polyamine, Polyisocyanate, Phenoplaste, usw.

Die Vernetzungsmittel werden in der Regel in einer Menge von 5 bis 60, bevorzugt 20 bis 40 Gew.-%, bezogen auf das Bindemitel, eingesetzt.

Häufig angewandte Methoden zur Vernetzung von Bindemitteln sind zum Beispiel in folgenden Patentdokumenten publiziert: GB 13,03 480, europäische Patentanmeldung 12 463, US—PS 42 52 703 und GB 15 57 516.

Beispiele für geeignete Aminoplastvernetzungsmittel sind der Hexamethylether von Hexamethylolmelamin, der Triethyltrimethylether von Hexamethylolmelamin, der Hexabutylether von Hexamethylolmelamin und der Hexamethylether von Hexamethylolmelamin und polymere butyliere Melaminformaldehydharze. Ebenso verwendbar sind alkylierte Harnstofformaldehydharze.

Als Vernetzungsmittel werden bevorzugt blockierte Polyisocyanate eingesetzt. Es können bei der Erfindung beliebige Polyisocyanate benutzt werden, bei denen die Isocyanatgruppen mit einer Verbindung

umgesetzt worden sind, so daß das gebildete blockierte Polyisocyanat gegenüber Hydroxylgruppen bei Raumtemperatur beständig ist, bei erhöhten Temperaturen, in der Regel im Bereich von etwa 90 bis etwa 300°C, aber reagiert. Bei der Herstellung der blockierten Polyisocyanate können beliebige für die Vernetzung geeignete organische Polyisocyanate verwendet werden. Bevorzugt sind die Isocyanate, die etwa 3 bis etwa 36, insbesondere etwa 8 bis etwa 15 Kohlenstoffatome enthalten. Beispiele geeigneter Diisocyanate sind Trimethylendiisocyanat, Tetramethylendiisocyanat, Pentamethylendiisocyanat, Hexamethylendiisocyanat, Propylendiisocyanat, Ethylethylendiisocyanat, 2,3-Dimethylethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylendiisocyanat, 2,6-Toluylendiisocyanat, 4,4'-Diphenylendiisocyanat, 1,5-Naphthylendiisocyanat, 1,4-Naphthylendiisocyanat, 1-Isocyanatomethyl-5-isocyanato-1,3,3-trimethylcyclohexan, bis(4-Isocyanatocyclohexyl)methan, bis(4-Isocyanatophenyl)methan, 4,4'-Diisocyanatodiphenylether und 2,3-bis(8-Isocyanatooctyl)-4-octyl-5-hexylcyclohexen. Es können auch Polyisocyanate von höherer Isocyanatfunktionalität verwendet werden. Beispiele dafür sind tris (4-Isocyanatophenyl)methan, 1,3,5-Triisocyanatobenzol, 2,4,6-Triisocyanatotoluol, 1,3,5-tris(6-Isocyanatohexylbiuret, bis (2,5-Diisocyanato-4-methylphenyl)methan und polymere Polyisocyanate, wie Dimere und Trimere von Diisocyanatotoluol. Ferner kann man auch Mischungen von Polyisocyanaten benutzen. Die bei der Erfingung als Vernetzungsmittel in Betracht kommenden organischen Polyisocyanate können auch Präpolymere sein, die sich beispielsweise von einem Polyol einschließlich eines Polyetherpolyols oder eines Polyesterpolyols ableiten.

Für die Blockierung der Polyisocyanate können beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl-, Octyl-, Nonyl-, 3,3,5-Trimethylhexyl-, Decyl und Lauryalkohol; cycloaliphatische Alkohole, wie Cyclopentanol und Cyclohexanol, aromatische Alkylalkohole, wie Phenylcarbinol und Methylphenylcarbinol.

Andere geeignete Blockierungsmittel sind Hydroxylamine, wie Ethanolamin, Oxime, wie Methylethylketonoxim, Acetonoxim und Cyclohexanonoxim oder Amine, wie Dibutylamin und Diisopropylamin.

Die genannten Polyisocyanate und Blockierungsmittel können bei geeigneten Mengenverhältnissen auch zur Herstellung der oben beschriebenen teilblockierten Polyisocyanate verwendet werden.

Den unter Verwendung der erfindungsgemäßen Bindemittel hergestellten wäßrigen Überzugszusammensetzungen können allgemein übliche Zusätze, wie zum Beipiel koaleszierende Lösungsmittel, Pigmente, oberflächenaktive Mittel, Vernetzungskatalysatoren, Antioxidantien, Füllstoffe und Antischaummittel, zugegeben werden.

Die mit Hilfe der erfindungsgemäßen Bindemittel zubereiteten wäßrigen Systeme sind insbesondere für das kationische Elektrotauchlackierverfahren geeignet; sie können aber auch in konventionellen Beschichtungsverfahren eingesetzt werden. Als Beschichtungssubstrate können zum Beispiel gegebenenfalls vorbehandelte Metalle, wie Eisen, Stahl, Kupfer, Zink, Messing, Magnesium, Zinn, Nickel, Chrom und Aluminium, aber auch imprägniertes Papier und andere elektrisch leitende Substrate benutzt werden.

Die erfindungsgemäßen Bindemittel eignen sich auch zur Herstellung von Pigmentpasten, das heißt, daß die Bindemittel auch als Reibharze eingesetzt werden können.

Bei der Verwendung des Harzes gemäß der Erfindung als Reibharz für die Herstellung einer Pigmentpaste werden die Mengenverhältnisse des epoxyhaltigen organischen Materials und des organischen tertiären Amins, die miteinander umgesetzt werden, bevorzugt so ausgewählt, daß das Trägerharz 0,8 bis 2,0 Stickstoffatome pro Molekül enthält. Geringere Mengen an quaternärem Stickstoff können zu einer schlechten Benetzbarkeit des Pigments führen, wogegen höhere Mengen zur Folge haben, daß die Harze zu wasserlöslich sind.

Man stellt Pigmentpasten nach der Erfindung her, indem man ein Pigment in dem Reibharz in gut bekannter Weise zerkleinert oder dispergiert. Die Pigmentpaste enthält als wesentliche Bestandteile das Reibharz und mindestens ein Pigment.

Außerdem können aber in der Pigmentzusammensetzung noch andere übliche Zusatzstoffe vorhanden sein, wie Weichmacher, Netzmittel, oberflächenaktive Mittel oder Entschäumer.

Die Anreibung der Pigmente erfolgt in der Regel in Kugelmühlen, Sandmühlen, Cowles-Mühlen und kontinuierlichen Mahlvorrichtungen bis das Pigment auf die gewünschte Teilchengröße zerkleinert worden ist und bevorzugt durch das Harz benetzt bzw. darin dispergiert worden ist. Nach dem Zerkleinern sollte die Teilchengröße des Pigments im Bereich von 10 Mikron oder weniger liegen. Im allgemeinen wird auf eine Hegman-Feinheit von etwa 6 bis 8 verkleinert. Bevorzugt wird die Anreibung in einer wäßrigen Dispersion des Reibharzes durchgeführt. Die in der anzurebienden Masse anwesende Wassermenge sollte ausreichend sein, um eine kontinuierliche wäßrige Phase zu bilden.

Als Pigment können bei der Erfindung die gut bekannten Pigmente benutzt werden. Im allgemeinen ist Titandioxid das einzige oder das hauptsächliche weiße Pigment. Andere weiße Pigmente oder Streckmittel, wie Antimonoxid, Zinkoxid, basisches Bleicarbonat, basisches Bleisulfat, Bariumcarbonat, Porzellan, Ton, Calciumcarbonat, Aluminiumsilicat, Siliciumdioxid, Magnesiumcarbonat und Magnesiumsilicat können aber auch verwendet werden. Als farbige Pigmente können beispielsweise Cadmiumgelb, Cadmiumrot, Ruß, Phthalocyaninblau, Chromgelb, Toluidinrot und hydratisiertes Eisenoxid benutzt werden. Wegen

weiteren allgemeinen Hinweisen auf die Zerkleinerung von Pigmenten und die Formulierung von Anstrichmassen wird auf folgende Bücher verwiesen:

D. H. Parker, Principles of Surface Coating Technology, Interscience Publishers, New York (1965)
R. L. Yates, Elektropainting, Robert Draper Ltd., Teddington, England (1966)
H. F. Payne, Organic Coating Technology, Band 2, Wiley and Sons, New York (1961).

Die modifizierten Epoxidharze sollten möglichst problemlos im industriellen Maßstab hergestellt werden können.

Die Erfindung betrifft auch ein Verfahren zur Herstellung von wasserverdünnbaren Bindemitteln für kationische Elektrotauchlacke auf der Basis von modifizierten Epoxidharzen, die Ammonium-, Sulfonium- und/oder Phosphoniumgruppen tragen.

Sowohl beim Aufbau als auch bei der Modifizierung von Epoxidharzen werden Epoxidgruppen unter Bildung von sekundären Hydroxylgruppen geöffnet. Die so gebildeten sekundären OH-Gruppen können wiederum an eine Epoxidgruppe addiert serden, wobei eine Etherbindung und eine neue sekundäre Hydroxylgruppe entstehen.

Bei der industriellen Produktion von modifizierten Epoxidharzen treten Schwierigkeiten auf, wenn es nicht gelingt, die Reaktion durch geeignete Wahl der Umsetzungsbedingungen so zu kontrollieren, daß genügend viele reaktionsfähige Epoxidgruppen zur Durchführung der erwünschten Modifizierungsreaktionen zur Verfügung stehen und daß keine Harze mit zu hoher Viskosität bzw. unbrauchbare Gele als Reaktionsprodukte erhalten werden.

Bisher versuchte man, die oben erlauterten Produktionsschwierigkeiten durch eine möglichst weitgehende Unterdrückung der Reaktion zwischen sekundären Hydroxylgruppen und Epoxidgruppen zu vermeiden.

So wurde zum Beispiel vorgeschlagen, die Gelbildungstendenz während der Herstellung von modifizierten Epoxidharzen durch Kettenverlängerungen mit organischen Polyolen, die mindestens zwei alkoholische primäre OH-Gruppen tragen (US—PS 4,104,147) bzw, Polymercaptoverbindung (US—PS 4,260,720) gering zu halten. Hierbei sollen Reaktionen zwischen den sekundären Hydroxylgruppen und Epoxidgruppen durch Umsetzungen zwischen den gegenüber Epoxidgruppen reaktiveren alkoholischen primären OH-Gruppen bzw. Mercaptogruppen und Epoxidgruppen zurückgedrängt werden.

Diese Methode der Reaktionssteuerung hat aber den Nachteil, daß bei jedem Kettenverlängerungsschritt mindestens 2 neue sekundäre Hydroxylgruppen gebildet werden.

Eine weitere Aufgabe der vorliegenden Erfindung bestand darin, günstigere Wege zur Lösung der oben beschriebenen Produktionsschwierigkeiten zu finden.

Diese Aufgabe wurde überraschenderweise dadurch gelöst, daß die modifizierten Epoxidharze durch ein Verfahren hergestellt werden, bei dem eine Diepoxidverbindung und/oder ein Gemisch von Diepoxidverbindungen, gegebenenfalls zusammen mit mindestens einer Monoepoxidverbindung in einer bei 100 bis 195°C, gegebenenfalls in Anwesenheit eines Katalysators durchgeführten, durch einen monofunktionell reagierenden Starter, der entweder eine alkoholische OH-Gruppe, eine phenolische OH- oder eine SH-Gruppe trägt, initiierten Polyadditionsreaktion zu einem Epoxidharz umgesetzt wird, in dem Diepoxidverbindung und Starter in einem Molverhältnis von >2:1 bis 10:1 eingebaut sind, und das so erhaltene Epoxidharz anschließend durch Umsetzung mit

A) primären und/oder sekundären Aminen oder deren Salzen und/oder dem Salz eines tertiären Amins, einer Sulfid/Säure- oder Phosphin/Säuremischung oder einem Gemisch aus diesen Verbindungen sowie gegebenenfalls mit

B) einem polyfunktionellen Alkohol, einer Polycarbonsäure, einem Polyamin, einem Polysulfid, einem Polyphenol oder einem Gemisch aus diesen Verbindungen

modifiziert und die Wasserverdünnbarkeit gegebenenfallsdurch Protonisierung mit einer wasserlöslichen Säure erreicht wird.

Wie das folgende Reaktionsschema zeigt, enthalten Epoxidharzmoleküle, die über eine durch einen monofunktionell reagierenden Starter initiierte Polyadditionsreaktion gebildet werden, nur eine einzige sekundäre Hydroxylgruppe.

Bei dem erfindungsgemäßen Verfahren kann die Zahl der gebildeten sekundären Hydroxylgruppen in einfacher Weise so gesteuert werden, daß die oben erörterten Produktionsschwierigkeiten nicht auftreten und die sonst als gefürchtete Nebenreaktion ablaufende Umsetzung zwischen sekundären Hydroxylgruppen und Epoxidgruppen nun gezielt als Hauptreaktion zum Harzaufbau genutzt werden kann.

Reaktionsschema des Aufbaus von Epoxidharzen über eine durch einen monofunktionell reagierenden Starter (z.B. R—OH) initiierte Polyadditionsreaktion von Diepoxidverbindungen (z.B. Bisphenol-A-diglycidylether):

*1. Startreaktion:*

Der Starter reagiert mit einer Epoxidgruppe unter Bildung einer sekundären Hydroxylgruppe:

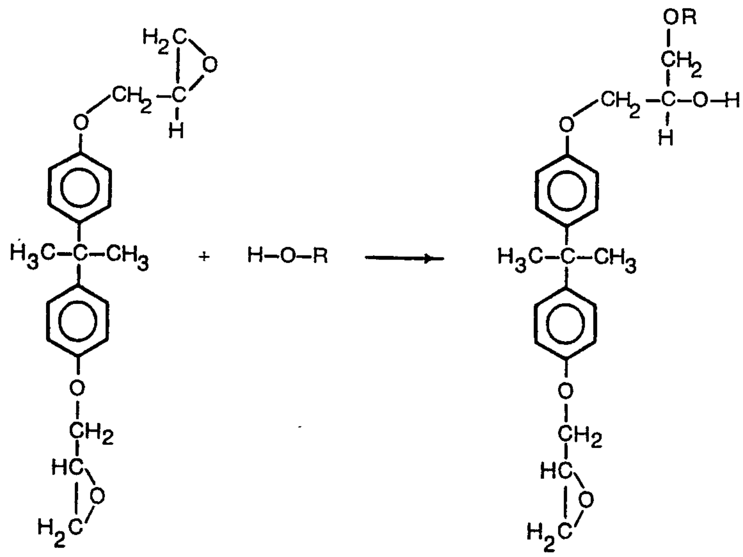

2. Harzaufbaureaktionsschritte:

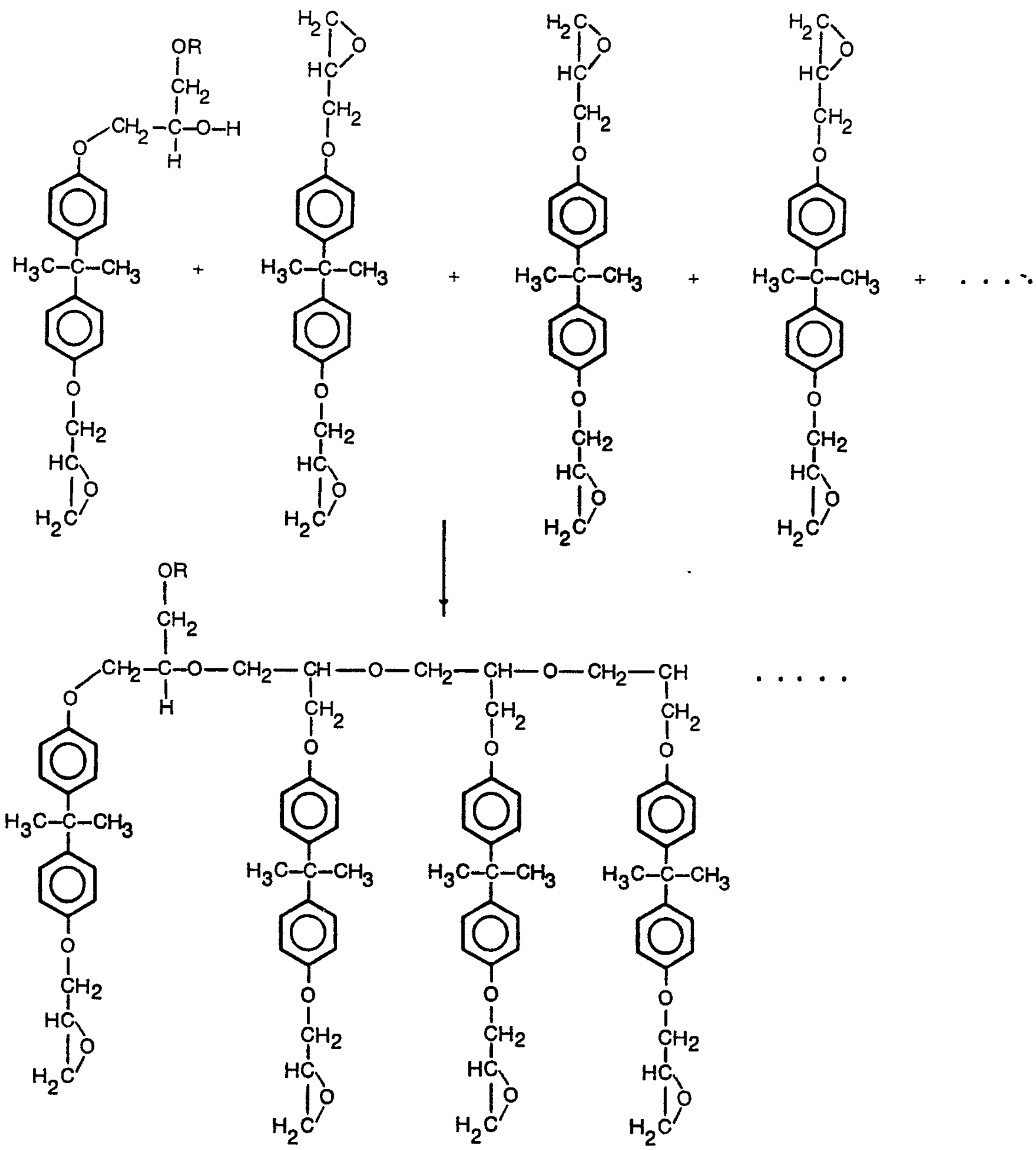

Das erfindungsgemäße Verfahren wird wie folgt durchgeführt.

Der monofunktionell reagierende Starter und die Di- bzw. Monoepoxidverbindung werden in Molverhältnis 1:1 gemischt und — gegebenenfalls in Anwesenheit von Katalysatoren — bei Temperaturen zwischen 100 und 195°C, vorzugsweise 115 und 185°C, vollständig umgesetzt. (Die Vollständigkeit des Umsatzes kann über Epoxidäquivalentgewichtsbestimmungen kontrolliert werden). Danach können unter den gleichen Reaktionsbedingungen weitere Di- bzw. Monoepoxidverbindungen addiert werden.

Die Polyaddition kann auch in der Weise durchgeführt werden, daß die gesamte Menge der umzusetzenden Epoxidverbindungen zusammen mit dem Starter in einem Schritt zur Reaktion gebracht wird.

In beiden Fällen wird die Reaktion so geführt, daß das Polyadditionsprodukt Diepoxidverbindung und Starter in einem Molverhältnis von >2:1 bis 10:1 eingebaut enthält.

Dieses Reaktionsprodukt kann dann mit der Komponente A und gegebenenfalls auch noch mit der Komponent B modifiziert werden. Die Reaktion mit der Komponente B kann auch vor der Umsetzung mit der Komponente A erfolgen.

Die Reaktion zwischen Aminen und epoxidgruppenhaltigen Verbindungen springt häufig schon beim Vermischen der Reaktionspartner an. Je nach gewünschtem Reaktionsverlauf — vor allem zur Vervollständigung der Umsetzung — ist es empfehlenswert, die Reaktionstemperatur auf 50° bis 150°C zu erhöhen.

Für die Umsetzung mit der epoxidhaltigen Verbindung sollte mindestens eine solche Menge an Amin verwendet werden, daß das Harz einen kationischen Charakter annimmt, d.h. daß es unter dem Einfluß einer Spannung in dem Beschichtungsbad zu der Kathode wandert, wenn es durch Zugabe einer Säure löslich gemacht worden ist. Es können im wesentlichen alle Epoxidgruppen des Harzes mit einem Amin umgesetzt werden. Es ist aber auch möglich, überschüssige Epoxygruppen in dem Harz zu belassen.

Eine weitere Möglichkeit, die erforderliche Wasserdispergierbarkeit zu erzielen, besteht darin, Mannich-Basen, d.h. Umsetzungsprodukte geeigneter, zur Reaktion mit einem Epoxidring geeignete Gruppen tragender Phenole mit Formaldehyd und einem sekundären Amin, zu verwenden. Hierdurch wird das Bindemitel gleichzeitig selbstvernetzbar.

Die Umsetzung mit Amin-Säuresalzen wird bei Temperaturen von 20° bis 110°C vorgenommen. Die Reaktion ist ohne Zugabe von Lösungsmitteln durchführbar, bei Anwesenheit von Lösungsmitteln, wie aromatischen Kohlenwasserstoffen oder Monoalkylether von Ethylglykol, aber leichter steuerbar.

Das Verhältnis zwischen dem Amin-Säuresalz und der Epoxyverbindung kann schwanken und die optimalen Verhältnisse hängen von den speziellen Ausgangsstoffen ab. Im allgemeinen können etwa 1 bis etwa 50 Gewichtsteile Salz auf 100 Gewichtsteile Polyepoxid verwendet werden. Im allgemeinen wird das Verhältnis in Abhängigkeit von dem sich von Quaternisierungsmittel ableitenden Stickstoffgehalt gewählt, der typischerweise etwa 0,05 bis etwa 16%, bezogen auf das Gesamtgewicht des Aminsalzes und des Polyepoxides, ausmacht.

Die Sulfid/Säuremischung und die Epoxidverbindung werden umgesetzt, indem man die Komponenten mischt und in der Regel auf mäßig erhöhte Temperaturen, wie 70° bis 110°C, erwärmt. Ein Lösungsmittel ist nicht notwendig, obwohl häufig eines verwendet wird, um eine bessere Kontrolle der Reaktion zu erreichen. Geeignete Lösungsmittel sind aromatische Kohlenwasserstoffe, Monoalkylether von Ethylenglykol und aliphatische Alkohole. Die Mengenanteile des Sulfids und der Epoxidverbindung können variiert werden, und die optimalen Verhältnisse der beiden Komponenten hängen von den speziellen Ausgangsstoffen ab. Üblicherweise werden aber etwa 1 bis 50 Gewichtsteile Sulfid auf 100 Gewichtsteile der Epoxyverbindung verwendet. Die Mengenverhältnisse werden häufig auf den Gehalt an Schwefel bezogen, der typischerweise bei etwa 0,1 bis 35%, bezogen auf das Gesamtgewicht des Sulfids und der Epoxyverbindung, liegt.

Die Phosphin/Säuremischung und die Epoxidverbindung werden umgesetzt, indem die Komponenten gemischt werden, wobei manchmal auf mäßig erhöhte Temperaturen erwärmt wird. Die Reaktionstemperatur ist nicht besonders kritisch, und sie wird in Abhängigkeit von den Ausgangsstoffen und ihren Reaktionsgeschwindigkeiten gewählt. Häufig verläuft die Reaktion bei Ramutemperatur oder bei bis auf 70° erhöhten Temperaturen befriedigend schnell. In manchen Fällen ist es ratsam, höhere Temperaturen wie von etwa 110°C oder höher zu verwenden. Ein Lösungsmittel ist nicht notwendig, obwohl es häufig zur besseren Kontrolle der Reaktion verwendet werden kann. Beispiele von geeigneten Lösungsmitteln sind aromatische Kohlenwasserstoffe, Monoalkylether von Ethylenglykol und aliphatische Alkohole. Die Mengenanteile des Phosphins und der Epoxidverbindung können variiert werden, und die optimalen Anteile hängen von den speziellen Ausgangsstoffen ab. Üblicherweise werden aber etwa 1 bis etwa 50 Gewichtsteile Phosphin auf 100 Gewichsteile der Epoxidverbindung verwendet. Die Mengenanteile werden häufig unter Bezugnahme auf den Anteil an Phosphin angegeben, wobei typischerweise etwa 0,1 bis etwa 35 Gew.-% Phosphin, bezogen auf das Gesamtgewicht von Phosphin und Epoxidverbindung verwendet werden.

Die Modifizierung mit der Komponente B wird bei Reaktionstemperaturen von 80° bis 170°C durchgeführt. Der Verlauf der Umsetzung des Polyadditionsprodukts mit den Komponenten A und gegebenenfalls B kann durch jeweilige Bestimmung des Epoxidäquivalentgewichtes verfolgt werden.

Die Erfindung betrifft auch ein Verfahren zum elektrophoretischen Beschichten eines als Kathode geschalteten elektrisch leitenden Substrates in einem wässrigen Bad, das neben üblichen Zusätzen wasserverdünnbare, kationische Bindemittel, die entweder durch Umsetzung selbstvernetzbar gemacht worden sind oder durch in Bad vorhandene Vernetzungsmittel vernetzt werden können, enthält und dadurch gekennzeichnet ist, daß Bindemittel hergestellt worden sind durch

a) eine bei 100 bis 195°C, gegebenenfalls in Anwesenheit eines Katalysators durchgeführte, durch einen monofunktionell reagierenden Starter, der entweder eine alkoholische OH-Gruppe, eine phenolische OH-Gruppe oder eine SH-Gruppe trägt, initiierte Polyaddition einer Diepoxidverbindung und/oder eines Gemisches von Diepoxidverbindungen, gegebenenfalls zusammen mit mindestens einer Monoepoxidverbindung, zu einem Epoxidharz, in dem Diepoxidverbindung und Starter in einem Molverhältnis von >2:1 bis 10:1 eingebaut sind, und anschließender

b) Modifizierung des aus a) erhaltenen Epoxidharzes mit

(A) einem primären und/oder sekundären Amin oder deren Salzen und/oder dem Salz eines tertiären Amins, einer Sulfid/Säure- oder Phosphin/Säuremischung oder einem Gemisch aus diesen Verbindungen sowie gegebenenfalls mit

(B) einem polyfunktionellen Alkohol, einer Polycarbonsäure, einem Polyamin, einem Polysulfid, einem Polyphenol oder einem Gemisch aus diesen Verbindungen und gegebenenfalls

c) Protonisierung mit einer wasserlöslichen Säure.

Bei der kationischen Abscheidung werden die zu überziehenden Gegenstände in eine wäßrige Dispersion des solubilisierten filmbildenden kationischen Bindemittels eingetaucht. Es wird eine elektrische Spannung zwischen dem zu überziehenden Gegenstand, der als Kathode dient, und einer Anode angelegt und das kationische Bindemittel wird durch den elektrischen Strom auf der Kathode abgeschieden. Der Gegenstand wird dann aus dem Bad entnommen und in der Regel abgespült. Dann wird der Überzug in üblicher Weise durch Erwärmen ausgehärtet.

Vorteilhafte Ausgestaltungen des erfindungsgemäßen Verfahrens ergeben sich aus den Ansprüchen 9 bis 15.

Die Erfindung wird in den folgenden Beispielen näher erläutert. Alle Angaben über Teile und Prozentsätze sind Gewichtsangaben, falls nicht ausdrücklich etwas anderes festgestellt wird.

Darstellung eines Vernetzers I

Gemäß der DE—OS 27 01 002, Beispiel 1, wird ein geblockter isocyanatvernetzer (Polyurethanvernetzer) hergestellt, indem 218 Teile 2-Ethylhexanol langsam zu 291 Teilen einer 80/20-Isomermischung von 2,4-/2,6-Toluylendiisocanat unter Rühren und in einer Stickstoffatmosphäre gegeben werden, wobei die Reaktionstemperatur durch äußere Kühlung unter 38°C gehalten wird. Der Ansatz wird noch eine weitere halbe Stunde bei 38°C gehalten und dann auf 60°C erwärmt, wonach 75 Teile Trimethylolpropan und anschließend 0,08 Teile Dibutylzinndilaurat als Katalysator zugegeben werden. Nach einer exothermen Reaktion zu Beginn wird der Ansatz 1,5 Stunden bei 121°C gehalten, bis im wesentlichen die gesamten Isocyanatgruppen verbraucht sind, was an dem Infrarotspektrum zu erkennen ist. Der Ansatz wird dann mit 249 Teilen Ethylenglykolmonoethylether verdünnt.

Darstellung eines Vernetzers II

Ein Vernetzungsmittel, das vernetzungsaktive β-Alkoxyalkylestergruppen trägt, wird folgendermaßen hergestellt:

In einem wärmeträgerölbeheizbaren Reaktionsgefäß mit Wasserabscheider, Rückflußkühler und zwischengeschalteter Raschig-Kolonne werden 1462 g Hexylglykol (10 mol) vorgelegt und unter Inertgaszufuhr und Rühren 1000 g Bernsteinsäureanhydrid (10 mol) eingetragen. Die Reaktionsmischung wird auf 120°C aufgeheizt, wobei die exotherme Wärmetönung die Temperatur kurzzeitig auf 130°C anhebt. Die Temperatur wird gehalten, bis die Säurezahl 230 mg KOH/g beträgt.

Anschließend werden 400 g Xylol, 5 g N-Cetyl-N,N,N-tri-methylammoniumbromid und 940 g eines Bisphenol A-Epoxidharzes mit einem Epoxidäquivalentgewicht von 188 (2,5 mol) zugegeben. Die Temperatur wird innerhalb von 1 Stunde wieder auf 130°C angehoben und dort gehalten, bis der Epoxidwert auf null abgesunken ist. Nach Zugabe von 2 g p-Toluolsulfonsäurelösung (25%ig in n-Propanol) wird die Temperatur innerhalb von 4 Stunden auf 200°C gesteigert, während das entstandene Reaktionswasser kontinuierlich ausgekreist wird. Nach weiterer Steigerung auf 220°C wird die Temperatur gehalten, bis annähernd 90 g Wasser abgeschieden sind, und die Säurezahl auf unter 2 mg KOH/g Festharz abgesunken ist. Sodann wird gekühlt und ohne Verdünnung ausgetragen.

Festkörper: 95,2 Gew.-% (gemessen durch 1-stündiges Erhitzen auf 130°C)
Säurezahl: 1,1 mg KOH/g Festharz
Viskosität: 480 mPas (gemessen nach Verdünnen mit Methyl-Isobutylketon auf 70 Gew.-% bei 25°C)

Darstellung eines Vernetzungsmittel III

2 340 g Glycidylester der 2-Methyl-2-Ethylheptansäure werden mit 2 073 g Trimellithsäureanhydrid in einem Reaktionsgefäß auf 130°C erhitzt. Hierbei springt die stark exotherme Reaktion an. Durch externe

Kühlung wird die Reaktion bei 150°C gehalten, bis eine Säurezahl von 183 erreicht ist. Danach kühlt man auf 90°C ab und sezt 1 450 g MIBK* zu. Anschließend tropft man 835 g Propylenoxid langsam zu. Bei einer Säurezahl 2 wird die Reaktion abgebrochen. Der Festkörper der Harzlösung wird mit weiterem MIBK* auf 70% eingestellt.

Darstellung eines Bindemittels I

In einem Reaktionsgefäß mit Rührer, Rückflußkühler, Innenthermometer und Stickstoffeinlaß werden 1 805 Teile eines flüssigen Epoxidharzes auf Basis Bisphenol A mit einem Epoxidäquivalentgewicht von 188 zusammen mit 450 Teilen Nonylphenol, 63 Teilen Xylol und 7 Teilen Dimethylbenzylamin vorgelegt. Die Reaktionsmischung wird auf 130°C erhitzt und bei dieser Temperatur gehalten, bis das Epoxidäquivalentgewicht einen Wert von 460 erreicht hat. Sodann fügt man 440 Teile Xylol zu und kühlt auf 80°C ab. Man tropft eine Mischung aus 126 Teilen Diethanolamin und 90 Teilen N-Methylethanolamin zu. Nachdem die Reaktion 1 Stunde bei dieser Temperatur fortgeführt wurde, läßt man 73 Teile Ethanolamin zutropfen, hält weitere 2 Stunden bei dieser Temperatur und verdünnt anschliessend mit 127 Teilen Hexylglykol. Es resultiert eine klare Harzlösung mit einem Feststoffgehalt von 80% und einem MEQ-Base-Wert von 1,45 Milliäquivalenten/g Festharz.

Darstellung eines Bindemittels II

Man verfährt wie bei der Herstellung des Bindemittels I. Die EEW*-Grenze liegt hier bei 400. Die geänderten Einwaagen sind wie folgt:

| | |
|---|---|
| Epoxidharz (EEW** = 188) | 2000 |
| tert.-Butylphenol | 139 |
| Xylol | 60 |
| Dimethylbenzylamin | 8 |
| Xylol | 406 |
| Diethanolamin | 280 |
| N,N-Dimethylaminopropylamin | 136 |
| Hexylglykol | 166 |
| n-Propanol | 413 |

Es resultiert eine klare Harzlösung mit einem Feststoffgehalt von 74,8% (gemessen 1 Stunde bei 190°C) und einem MEQ-Base-Wert von 2,15 Milliäquivalenten/g Festharz.

Darstellung eines Bindemittels III

Analog zur Darstellung des Bindemittels I werden 1 805 Teile Epoxidharz (EEW = 188), 352 Teile Nonylphenol, 67 Teile Xylol und 10 Teile Dimethyllaurylamin bei 130°C umgesetzt bis zu einem Epoxidäquivalentgewicht von 450. Innerhalb 1 Stunde wird eine 71,3%ige Lösung von Ethanolamin-methylisobutylketimin in Methylisobutylketon bei dieser Temperatur zugetropft. Man hält die Reaktion noch weitere 7 Stunden aufrecht, bevor man mit 141 Teilen Hexylglykol auf einen Festkörper von 83,5% (1 Stunde bei 130°C) verdünnt. Das Harz hat einen MEQ-Base-Wert von 1,68 Milliäquivalenten/g Festharz.

Herstellung von wässrigen Dispersionen I—IV

Die Bindemittel werden nun in wässrige Dispersionen überführt, indem die Komponenten der nachfolgenden Tabelle gemischt und mit entionisiertem Waser (Pos. 1) versetzt werden. Nach 20 minütigem Homogenisieren wird portionsweise mit entionisiertem Wasser (Pos. 2) weiter verdünnt. Die Dispersionen werden anschließend einer kurzzeitigen Vakuumdestillation unterworfen, wobei die organische Phase aus dem Destillat abgetrennt wird.

*MIBK = Methylisobutylketon

** EEW = Epoxidäquivalentgewicht

| Dispersionen | I | II | III | IV |
|---|---|---|---|---|
| Bindemittel I | 937 | 937 | — | — |
| Bindemittel II | — | — | 1002 | — |
| Bindemittel III | — | — | — | 898 |
| Vernetzer I | — | 528 | — | 528 |
| Vernetzer III | — | — | 388 | — |
| Vernetzer IV | 528 | — | — | — |
| Dibutylzinndilaurat | — | 8 | — | 8 |
| Blei(II)-octoat-Lösunng (24% Pb) | 28 | — | 28 | — |
| Entschäumerlösung | 1,2 | 1,2 | 1,2 | 1,2 |
| Eisessig entionisiertes | 26,1 | 26,1 | 29,1 | 33,7 |
| Wasser 1 entionisiertes | 748 | 748 | 820 | 780 |
| Wasser 2 | 1493 | 960 | 2240 | 1760 |

Festkörper (60′ 130°C) 31,8% 35,1% 26,4% 28,5%

Darstellung einer grauen Pigmentpaste

Zu 953 Teilen eines handelsüblichen Epoxidharzes auf Basis Bisphenol A mit einem Epoxidäquivalentgewicht von 890 werden 800 Teile Butylglykol gegeben. Die Mischung wird auf 80°C erhitzt. In die Harzlösung werden dann 221 Teile eines Umsetzungsproduktes aus 101 Teilen Diethanolamin und 120 Teilen 80%iger wässriger Milchsäure gegeben. Man führt die Reaktion bei 80°C durch bis die Säurezahl unter 1 gefallen ist.

1 800 Teile dieses Produkts werden mit 2 447 Teilen entionisiertem Wasser vorgelegt und mit 2 460 Teilen $TiO_2$, 590 Teilen eines Extenders auf Basis Aluminiumsilikat, 135 Teilen Bleisilikat und 37 Teilen Ruß vermengt. Diese Mischung wird in einem Mahlaggregat auf eine Hegman-Feinheit von 5 bis 7 zerkleinert. Danach gibt man 1 255 Teile entionisiertes Wasser zu, um die gewünschte Pastenkonsistenz zu erreichen. Diese graue Paste ist sehr lagerstabil.

Zubereitung der Elektrotauchbäder I bis IV

Die Bindemitteldispersion wird in folgendem Verhältnis mit der graeuen Pigmentpaste vermischt.

| Bad | | Bindemittel | Paste |
|---|---|---|---|
| I | I | 2201 | 775 |
| II | II | 2000 | 775 |
| III | III | 2651 | 775 |
| IV | IV | 2456 | 775 |

Der Badfestkörper wird mit entionisiertem Wasser auf 20% (150°C, 30′) eingestellt. Man läßt dann das Bad 3 Tage bei Raumtemperatur unter Rühren altern Die Abscheidung der Lackfilme erfolgt während 2 Minuten auf zinkphosphatiertem Blech. Die Badtemperatur beträgt hierbei 27°C. Die abgeschiedenen Filme werden bei 180°C während 20 Minuten eingebrannt.

Ergebnis der Abscheidungen

| | Bad I | Bad II | Bad III | Bad IV |
|---|---|---|---|---|
| Abscheidespannung | 250 V | 310 V | 310 V | 270 V |
| Schichtdicke | 28 µm | 26 µm | 20 µm | 29 µm |
| MIBK-Test* | i.O. | i.O. | i.O. | i.O. |
| Verlauf** | 1.5 | 1 | 1 | 1,5 |
| Gitterschnitt** | 0 | 0 | 0 | 0 |
| Erichsentiefung | 7,8 mm | 9,2 mm | 8,7 mm | 8,3 mm |

* 20 Doppelhübe mit einem MIBK getränkten Wattebausch
** 0 = bester Wert, 5 = schlechtester Wert

**Patentansprüche**

1. Wasserverdünnbare Bindemittel für kationische Elektrotauchlacke auf der Basis von modifizierten Epoxidharzen, die Ammonium-, Sulfonium- und/oder Phosphoniumgruppen enthalten, dadurch gekennzeichnet, daß die Bindemittel hergestellt worden sind durch

a) eine bei 100 bis 195°C, gegebenenfalls in Anwesenheit eines Katalysators durchgeführten durch einen monofunktionell reagierenden Starter, der entweder eine alkoholische OH-Gruppe, eine phenolische OH-Gruppe oder eine SH-Gruppe trägt, initiierten Polyaddition einer Diepoxidverbindung und/oder eines Gemisches von Diepoxidverbindungen, gegebenenfalls zusammen mit mindestens einer Monoepoxidverbindung, zu einem Epoxidharz, in dem Diepoxidverbindung und Starter in einem Molverhältnis von >2:1 bis 10:1 eingebaut sind, und anschließender

b) Modifizierung des aus a) erhaltenen Epoxidharzes mit

A) einem primären und/oder sekundären Amin oder deren Salzen und/oder dem Salz eines tertiären Amins, einer Sulfid/Säure- oder Phosphin/Säuremischung oder einem Gemisch aus diesen Verbindungen sowie gegebenenfalls mit

B) einem polyfunktionellen Alkohol, einer Polycarbonsäure, einem Polyamin, einem Polysulfid, einem Polyphenol oder einem Gemisch aus diesen Verbindungen und gegebenenfalls

c) Protonisierung mit einer wasserlöslichen Säure.

2. Bindemittel nach Anspruch 1, dadurch gekennzeichnet, daß als Starter eine Verbindung der allgemeinen Formel

$$R^1—OH$$

wobei $R^1$ folgende Bedeutung haben kann

$R^1$ = Alkyl- (bevorzugt mit 1 bis 20 C-Atomen, besonders bevorzugt Methyl-, Ethyl-, (Iso-) Propyl-, (Iso-) Butyl, (Iso) Amyl-, 2-Ethylbutyl-, 2-Ethylhexyl-, Isononyl-, Isodecyl-, Isotridecyl-, Isohexadecyl-, Isooctadecyl-, Neopentyl-, 3,7-Dimethyloctyl-(3)-, 3-Cyclohexylpropyl-, 2,4-Dimethylpentyl-(3)-).
= Alkenyl (besonders bevorzugt 1-Butenyl-(3)-, 2-Methylbuten (3)yl(2)-, 3-Methylpenten (1)yl(3)
= $R^2—X—R^3—$, wobei
$R^2$ = Alkyl- (mit 1 bis 6 C-Atomen, bevorzugt Methyl-, Ethyl-, Butyl-, Hexyl-) oder Phenyl-
$R^3$ = $CH_2CH_2—(OCH_2—CH_2)n—$ mit n = 0 bis 10, insbesondere 0,1 und 2), Propyl-, Butyl-
X = O oder S
= Cycloalkyl, besonders bevorzugt Cyclohexyl, bevorzugt 4-t-Butylcyclohexyl
= Aryl, besonders bevorzugt

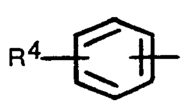 mit

$R^4$ = H, Alkyl- (bevorzugt mit 1 bis 20 C-Atomen, besonders bevorzugt t-Butyl-, Nonyl- und Dodecyl-)
$R^4$ = $R^5—O—$ (bevorzugt in p-Stellung zur phenolischen OH-Gruppe) mit $R^5$ = Alkyl (bevorzugt mit 1—10 C-Atomen, besonders bevorzugt Methyl)
$R^1$ = Aralkyl, bevorzugt Benzyl-, 4-Methylbenzyl-, Phenylethyl-, 2-Phenylpropyl-(1)-
oder eine Verbindung der allgemeinen Formel $R^6—SH$, wobei $R^6$ folgende Bedeutung haben kann
$R^6$ = Alkyl (bevorzugt mit 1 bis 20 C-Atomen, besonders bevorzugt n-Butyl- und Dodecyl-)
= $R^7—OOC(CH_2)_n—$ mit n = 1,2 und $R^7$ = Alkylrest mit 1 bis 8 C-Atomen (bevorzugt Butyl, 2-Ethyl-hexyl)

= Cycloalkyl-, besonders bevorzugt Cyclohexyl
= Aryl-, besonders bevorzugt Phenyl-
= Aralkyl-, besonders bevorzugt Benzyl-
oder ein Gemisch aus diesen Verbindungen eingesetzt worden ist.

3. Bindemittel nach den Ansprüchen 1 und 2, dadurch gekennzeichnet, daß Di- und gegebenenfalls Monoepoxidverbindungen mit einem Epoxidäquivalentgewicht unter 500 eingesetzt worden sind.

4. Bindemittel nach den Ansprüchen 1 bis 3, dadurch gekennzeichnet, daß als Diepoxidverbindung ein Bisphenol-A-diglycidylether mit einem Epoxidäquivalentgewicht unter 500 eingesetzt worden ist.

5. Bindemittel nach den Ansprüchen 1 bis 4, dadurch gekennzeichnet, daß die als Komponente B aufgezählten Verbindungen Molekulargewichte von 100 bis 3500, bevorzugt 350 bis 1000, aufweisen.

6. Bindemittel nach den Ansprüchen 1 bis 5, dadurch gekennzeichnet, daß der Anteil der eingesetzten Menge an Komponente B) 5—60 Gewichtsprozent, bezogen auf die Summe der zur Durchführung der Polyaddition eingesetzten Ausgangsmaterialien und der Komponente B, betragen hat und in Abhängigkeit vom Molekulargewicht der Komponente B so gewählt worden ist, daß das molare Verhältnis zwischen dem zu modifizierenden Polyadditionsprodukt und der Komponente B 4:1 bis 0,8:1, bevorzugt 2:1, betragen hat.

7. Bindemittel nach den Ansprüchen 1 bis 6, dadurch gekennzeichnet, daß als Komponente B ein Polyphenol oder ein Gemisch von Polyphenolen der allgemeinen Formel (I) eingesetzt worden ist.

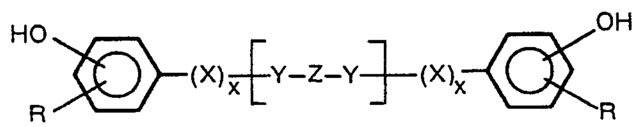

(I)

in der bedeuten
X = Alkylen, Arylen, Alkarylen
O, O-Alkylen, O-Arylen, O-Alkarylen
S, S-Alkylen, S-Arylen, S-Alkarylen
CO, CO-Alkylen, CO-Arylen, CO-Alkarylen
NH, NH-Alkylen, NH-Arylen, NH-Alkarylen
x = 0 oder 1

Y = X, 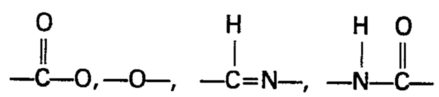

Z = Alkylen, Alkylenrest auf Basis von Polyestern, Polyethern, Polyamiden, Polycarbonaten, Polyurethanen
R = H, $CH_3$, Alkyl, —O, —$CH_3$, O-Alkyl, —$NO_2$, $NR'_2$, —NR′ R″, —NHCOR‴

8. Bindemittel nach den Ansprüchen 1 bis 7, dadurch gekennzeichnet, daß es durch Umsetzung selbstvernetzbar gemacht worden ist und/oder ein Vernetzungsmittel enthält.

9. Verfahren zur Herstellung von wasserverdünnbaren Bindemitteln für kationische Elektrotauchlacke auf der Basis von modifizierten Epoxidharzen, die Ammonium-, Sulfonium- und/oder Phosphoniumgruppen enthalten, dadurch gekennzeichnet, daß eine Diepoxidverbindung und/oder ein Gemisch von Diepoxidverbindungen, gegebenenfalls zusammen mit mindestens einer Monoepoxidverbindung in einer bei 100 bis 195°C, gegebenenfalls in Anwesenheit eines Katalysators durchgeführten durch einen monofunktionell reagierenden Starter, der entweder eine alkoholische OH-Gruppe, eine phenolische OH- oder eine SH-Gruppe trägt, initiierten Polyadditionsreaktion zu einem Epoxidharz umgesetzt wird, in dem Diepoxidverbindung und Starter in einem Molverhältnis von >2:1 bis 10:1 eingebaut sind, und das so erhaltene Epoxidharz anschließend durch Umsetzung mit

A) primären und/oder sekundären Amin oder deren Salzen und/oder dem Salz eines tertiären Amins, einer Sulfid/Säure- oder Phosphin/Säuremischung oder einem gemisch aus diesem Verbindungen sowie gegebenenfalls mit

B) einem polyfunktionellen Alkohol, einer Polycarbonsäure, einem Polyamin, einem Polysulfid, einem Polyphenol oder einem Gemisch aus diesen Verbindungen

modifiziert und die Wasserverdünnbarkeit gegebenenfalls durch Protonisierung mit einer wasserlöslichen Säure erreicht wird.

10. Verfahren nach Anspruch 9, dadurch gekennzeichnet, daß als Starter eine Verbindung der allgemeinen Formel

$R^1$—OH

wobei $R^1$ folgende Bedeutung haben kann
$R^1$ = Alkyl- (bevorzugt mit 1 bis 20 C-Atomen, besonders bevorzugt Methyl-, Ethyl-, (Iso-) Propyl-, (Iso-) Butyl-, (Iso) Amyl-, 2-Ethylbutyl-, 2-Ethylhexyl-, Isononyl-, Isodecyl-, Isotridecyl-, Isohexadecyl-, Isooctadecyl-, Neopentyl-, 3,7-Dimethyloctyl-(3)-, 3-Cyclohexylpropyl-, 2,4-Dimethylpentyl(3)-).

= Alkenyl (besonders bevorzugt 1-Butenyl-(3)-, 2-Methylbuten (3)yl(2)-, 3-Methylpenten (1)yl(3)
= $R^2$—X—$R^3$—, wobei
$R^2$ = Alkyl- (mit 1 bis 6 C-Atomen, bevorzugt Methyl-, Ethyl-, Butyl-, Hexyl-) oder Phenyl-
$R^3$ = $CH_2CH_2$—($OCH_2$—$CH_2$)n— mit n = 0 bis 10, insbesondere 0,1 und 2), Propyl-, Butyl-
X = O oder S
= Cycloalkyl, besonders bevorzugt Cyclohexyl, bevorzugt 4-t-Butylcyclohexyl
= Aryl, besonders bevorzugt

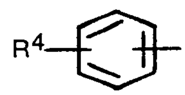 mit

$R^4$ = H, Alkyl- (bevorzugt mit 1 bis 20 C-Atomen, besonders bevorzugt t-Butyl-, Nonyl- und Dodecyl-)
$R^4$ = $R^5$—O— (bevorzugt in p-Stellung zur phenolischen OH-Gruppe) mit $R^5$ = Alkyl (bevorzugt mit 1—10 C-Atomen, besonders bevorzugt Methyl)
$R^1$ = Aralkyl, bevorzugt Benzyl-, 4-Methylbenzyl-, Phenylethyl-, 2-Phenylpropyl-(1)-
oder eine Verbindung der allgemeinen Formel $R^6$—SH, wobei $R^6$ folgende Bedeutung haben kann
$R^6$ = Alkyl (bevorzugt mit 1 bis 20 C-Atomen, besonders bevorzugt n-Butyl- und Dodecyl-)
= $R^7$—$OOC(CH_2)_n$— mit n = 1,2 und $R^7$ = Alkylrest mit 1 bis 8 C-Atomen (bevorzugt Butyl, 2-Ethyl-hexyl)
= Cycloalkyl-, besonders bevorzugt Cyclohexyl
= Aryl-, besonders bevorzugt Phenyl-
= Aralkyl-, besonders bevorzugt Benzyl-
oder ein Gemisch aus diesen Verbindungen eingesetzt wird.

11. Verfahren nach Ansprüchen 9 bis 10, dadurch gekennzeichnet, daß Di- und gegebenenfalls Monoepoxidverbindungen mit einem Epoxidäquivalentgewicht unter 500 eingesetzt worden.

12. Verfahren nach Ansprüchen 9 bis 11, dadurch gekennzeichnet, daß als Diepoxidverbindung ein Bisphenol-A-Diglycidylether mit einem Epoxidäquivalentgewicht unter 500 eingesetzt wird.

13. Verfahren nach den Ansprüchen 9 bis 12, dadurch gekennzeichnet, daß die als Komponente B eingesetzten Verbindungen Molekulargewichte von 100 bis 3500, bevorzugt 350 bis 1000, aufweisen.

14. Verfahren nach Ansprüchen 9 bis 13, dadurch gekennzeichnet, daß der Anteil der eingesetzten Menge an Komponente B 5—60 Gewichts-%, bezogen auf die Summe der zur Durchführung der Polyaddition eingesetzten Ausgangsmaterialien und der Komponente B, betragt und in Abhängigkeit vom Molekulargewicht der Komponente B so gewählt wird, daß das molare Verhältnis zwischen dem zu modifizierenden Polyadditionsprodukt und der Komponente B 4:1 bis 0,8:1, bevorzugt 2:1, betragt.

15. Verfahren nach Ansprüchen 9 bis 14, dadurch gekennzeichnet, daß als Komponente B ein Polyphenol oder ein Gemisch von Polyphenolen der allgemeinen Formel I eingesetzt wird.

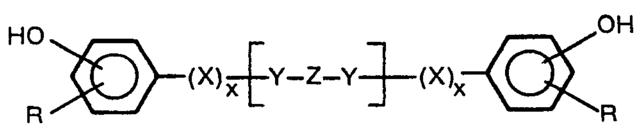 (I)

in der bedeuten
X = Alkylen, Arylen, Alkarylen
O, O-Alkylen, O-Arylen, O-Alkarylen
S, S-Alkylen, S-Arylen, S-Alkarylen
CO, CO-Alkylen, CO-Arylen, CO-Alkarylen
NH, NH-Alkylen, NH-Arylen, NH-Alkarylen
x = 0 oder 1

Y = X, 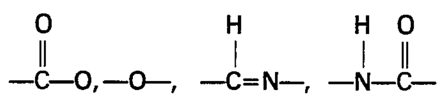

Z = Alkylen, Alkylenrest auf Basis von Polyestern, Polyethern, Polyamiden, Polycarbonaten, Polyurethanen
R = H, $CH_3$, Alkyl, —O, —$CH_3$, O-Alkyl, —$NO_2$, $NR'_2$, —NR' R'', —NHCOR'''

16. Verfahren zum elektrophoretischen Beschichten eines als Kathode geschalteten elektrisch leitenden Substrates in einem wäßrigen Bad, das neben üblichen Zusätzen wasserverdünnbare, kationische Bindemittel, die entweder durch Umsetzung selbstvernetzbar gemacht worden sind oder durch im Bad vorhandene Vernetzungsmittel vernetzt werden können, enthält, dadurch gekennzeichnet, daß die Bindemittel hergestellt worden sind durch

a) eine bei 100 bis 195°C, gegebenenfalls in Anwesenheit eines Katalysators durchgeführten, durch einen monofunktionell reagierenden Starter, der entweder eine alkoholische OH-Gruppe, eine phenolische OH-Gruppe oder eine SH-Gruppe trägt, initiierten Polyaddition einer Diepoxidverbindung und/oder eines

Gemisches von Diepoxidverbindungen, gegebenenfalls zusammen mit mindestens einer Monoepoxidverbindung, zu einem Epoxidharz, in dem Diepoxidverbindung und Starter in einem Molverhältnis von >2:1 bis 10:1 eingebaut sind, und anschließender

b) Modifizierung des aus a) erhaltenen Epoxidharzes mit

A) einem primären und/oder sekundären Amin oder deren Salzen und/oder dem Salz eines tertiären Amins, einer Sulfid/Säure- oder Phosphin/Säuremischung oder einem Gemisch aus diesen Verbindungen sowie gegebenenfalls mit

B) einem polyfunktionellen Alkohol, einer Polycarbonsäure, einem Polyamin, einem Polysulfid, einem Polyphenol oder einem gemisch aus diesen Verbindungen und gegebenenfalls

c) Protonisierung mit einer wasserlöslichen Säure.

**Revendications**

1. Liants diluables dans l'eau pour laques d'électrodéposition cationiques, à base de résines époxidiques modifiées, qui contiennent des groupes ammonium, sulfonium et/ou phosphonium, caractérisés par le fait que les liants ont été obtenus par

(a) une polyaddition amorcée par un amorceur réagissant de façon monofonctionnelle qui porte soit un groupe OH alcoolique, soit un groupe OH phénolique, soit un groupe SH, conduite à une température de 100 à 195°C, le cas échéant en présence d'un catalyseur, d'un composé diépoxydique et/ou d'un mélange de composés diépoxydique et/ou d'un mélange de composés diépoxydiques, le cas échéant conjointement avec au moins un composé monoépoxydique, pour donner une résine époxydique, dans laquelle le composé diépoxydique et l'amorceur sont incorporés dans un rapport molaire de >2:1 à 10:1, puis

(b) une modification de la résine époxydique obtenue en (a) par:

(A) une amine primaire et/secondaire ou ses sels et/ou le sel d'une amine tertiaire, un mélange sulfure/acide ou phosphine/acide ou un mélange de ces composés, de même que, le cas échéant, par

(B) un alcool polyfonctionnel, un acide polycarboxylique, une polyamine, un polysulfure, un polyphénol ou un mélange de ces composés, et le cas échéant,

(c) une protonation par un acide soluble dans l'eau.

2. Liants selon la revendication 1, caractérisés par le fait qu'en tant qu'amorceur, a été utilisé un composé de la formule générale:

$$R^1—OH$$

où $R^1$ peut avoir la signification suivante:

$R^1$ = alkyle (de préférence avec 1 à 20 atomes de carbone, de façon particulière préférée, méthyle, éthyle, (iso)propyle, (iso)butyle, (iso)amyle, éthyl-2 butyle, éthyl-2 hexyle, isononyle, isodécyle, isotridécyle, isohexadécyle, isooctadécyle, néopentyle, diméthyl-3,7 octyle-(3), cyclohexyl-3 propyle, diméthyl-2,4 pentyle-(3));

= alcényle (de façon particulièrement préférée, butène-1 yle-(3), méthyl-2 butène-(3)yle-(2), méthyl-3 pentène-(1)yle-(3))

= $R^2—X—R^3—$, ou:

$R^2$ = alkyle (avec 1 à 6 atomes de carbone, de préférence, méthyle, éthyle, butyle hexyle) ou phényle.

$R^3$ = $CH_2CH_2—(OCH_2—CH_2)n—$ avec n = 0 bis 10, en particulier 0, 1 et 2, propyle, butyle,

X = O ou S

= cycloalkyle, de façon particulièrement préférée, cyclohexyle, de préférence, t-butyl-4-cyclohexyle.

= aryle, de façon particulièrement préférée

R4 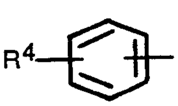 avec

$R^4$ = H, alkyle (de préférence avec 1 à 20 atomes de carbone, de façon particulièrement préférée, t-butyle, nonyle et dodécyle).

$R^4$ = $R^5—O—$ (de préférence en position p par rapport au groupe OH phénolique) avec

$R^5$ = alkyle de préférence, avec 1 à 10 atomes de carbone, de façon particulièrement préférée, méthyle)

$R^1$ = aralkyle, de préférence benzyle, méthyl-4 benzyle, phényléthyle, phényl-2 propyle-(1)

ou un composé de la formule générale:

$$R^6—SH$$

où $R^6$ peut avoir la signification suivante:

$R^6$ = alkyle (de préférence avec 1 à 20 atomes de carbone, de façon particulièrement préférée, n-butyle et dodécyle)

= $R^7$ $—OOC(CH_2)_n—$ avec n = 1, 2 et $R^7$ = reste alkyle avec 1 à 8 atomes de carbone (de préférence, butyle, éthyl-2 hexyle)

= cycloalkyle, de façon particulièrement préférée, cyclohexyle
= aryle, de façon particulière préférée, phényle,
= aralkyle, de façon particulière préférée, benzyle
ou un mélange de ces composés.

3. Liants selon l'une des revendications 1 et 2, caractérisés par le fait que des composés diépoxydiques et, le cas échéant, monoépoxydiques présentant un poids équivalent en époxyde inférieur à 500 ont été utilisés.

4. Liants selon l'une des revendications 1 à 3, caractérisés par le fait que, comme composé diépoxydique, a été utilisé un diglycidyl éther du bisphénol A présentant un poids équivalent en époxyde inférieur à 500.

5. Liants selon l'une des revendications 1 à 4, caractérisés par le fait que les composés choisis comme composant (B) présentent des masses moléculaires de 100 à 3500, de préférence, de 350 à 1000.

6. Liants selon l'une des revendications 1 à 5, caractérisés par le fait que la fraction de la quantité utilisée en composant (B) s'est élevée à 5—60 pour cent en poids, par rapport à la somme des matières de départ utilisées pour la conduite de la polyaddition et du composant (B) et a été choisie en fonction de la masse moléculaire du composant (B), de sorte que le rapport molaire entre le produit de polyaddition à modifier et le composant (B) se soit élevé à 4:1 à 0,8:1, de préférence, à 2:1.

7. Liants selon l'une des revendications 1 à 6, caractérisés par le fait que, comme composant (B), a été utilisé un polyphénol ou un mélange de polyphénols de la formule générale (I):

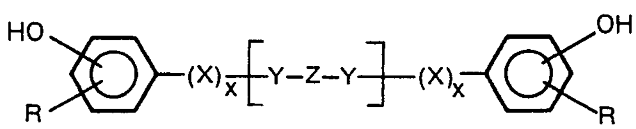

(I)

dans laquelle:
X = alkylène, arylène, alkarylène,
O, O-alkylène, O-arylène, O-alkarylène
S, S-alkylène, S-arylène, S-alkarylène
CO, CO-alkylène, CO-arylène, CO-alkarylène
NH, NH-alkylène, NH-arylène, NH-alkarylène
x = 0 ou 1

Y = X, 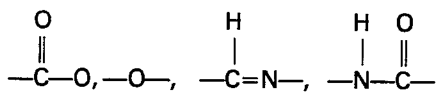

Z = alkylène, reste alkylène à base de polyesters, polyéthers, polyamides, polycarbonates, polyuréthannes
R = H, $CH_3$, alkyle, $—O—CH_3$, O-alkyle, $—NO_2$, $NR'_2$, —NR' R'', —NHCOR'''.

8. Liants selon l'une des revendications 1 à 7, caractérisés par le fait qu'il a été rendu auto-réticulable par réaction et/ou qu'il contient un agent réticulant.

9. Procédé de fabrication de liants diluables dans l'eau pour laques d'électrodéposition cationiques à base de résines époxydiques modifiées, qui contiennent des groupes ammonium, sulfonium et/ou phosphonium, caractérisé par le fait qu'on fait réagir un composé diépoxydique et/ou un mélange de composés diépoxydiques, le cas échéant conjointement de polyaddition amorcée par un amorceur réagissant de façon monofonctionnelle, qui porte, soit un groupe OH alcoolique, soit un groupe OH phénolique, soit un groupe SH, conduite à une température de 100 à 195°C, le cas échéant en présence d'un catalyseur, pour obtenir une résine époxydique dans laquelle le composé diépoxydique et l'amorceur sont incorporés dans un rapport molaire >2:1 à 10:1, et qu'on modifie ensuite la résine époxydique ainsi obtenue par réaction avec:

(A) des amines primaires et/secondaires ou leurs sels et/ou le sel d'une amine tertiaire, un mélange sulfure/acide ou phosphine/acide ou un mélange de ces composés, de même que, le cas échéant, par

(B) un alcool polyfonctionnel, un acide polycarboxylique, une polyamine, un polysulfure, unpolyphénol ou un mélange de ces composés,

et que le caractère diluable dans l'eau est obtenu le cas échéant par protonation par un acide soluble dans l'eau.

10. Procédé selon la revendication 9, caractérisé par le fait qu'on utilise, comme amorceur, un composé de la formule générale

$$R^1—OH$$

où $R^1$ peut avoir la signification suivante:
$R^1$ = alkyle (de préférence avec 1 à 20 atomes de carbone, de façon particulière préférée, méthyle, éthyle, (iso)propyle, (iso)butyle, (iso)amyle, éthyl-2 butyle, éthyl-2 hexyle, isononyle, isodécyle, isotridécyle,

isohexadécyle, isooctadécyle, néopentyle, diméthyl-3,7 octyle-(3), cyclohexyl-3 propyle, diméthyl-2,4 pentyle-(3));

= alcényle (de façon particulièrement préférée, butène-1 yle-(3), méthyl-2 butène-(3)yle-(2), méthyl-3 pentène-(1)yle-(3))

= $R^2$—X—$R^3$—, ou:

$R^2$ = alkyle (avec 1 à 6 atomes de carbone, de préférence, méthyle, éthyle, butyle hexyle) ou phényle.

$R^3$ = $CH_2CH_2$—$(OCH_2—CH_2)n$— avec n = 0 à 10, en particulier 0, 1 et 2, propyle, butyle,

X = O ou S

= cycloalkyle, de façon particulièrement préférée, cyclohexyle, de préférence, t-butyl-4-cyclohexyle.

= aryle, de façon particulièrement préférée

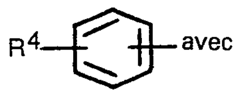 avec

$R^4$ = H, alkyle (de préférence avec 1 à 20 atomes de carbone, de façon particulièrement préférée, t-butyle, nonyle et dodécyle).

$R^4$ = $R^5$—O— (de préférence en position p par rapport au groupe OH phénolique) avec

$R^5$ = alkyle de preference, avec 1 à 10 atomes de carbone, de façon particulièrement préférée, méthyle)

$R^1$ = aralkyle, de préférence benzyle, méthyl-4 benzyle, phényléthyle, phényl-2 propyle-(1)

ou un composé de la formule générale:

$$R^6—SH$$

où $R^6$ peut avoir la signification suivante:

$R^6$ = alkyle (de préférence avec 1 à 20 atomes de carbone, de façon particulièrement préférée, n-butyle et dodécyle)

= $R^7$ —$OOC(CH_2)_n$— avec n = 1,2 et $R^7$ = reste alkyle avec 1 à 8 atomes de carbone (de préférence, butyle, éthyl-2 hexyle)

= cycloalkyle, de façon particulièrement préférée, cyclohexyle

= aryle, de façon particulière préférée, phényle,

= aralkyle, de façon particulière préférée, benzyle

ou un mélange de ces composés.

11. Procédé selon l'une des revendications 9 et 10, caractérisé par le fait que des composés diépoxydiques et, le cas échéant, monoépoxydiques présentant un poids équivalent en époxyde inférieur à 500 sont utilisés.

12. Procédé selon l'une des revendications 9 à 11, caractérisé par le fait que, comme composé diépoxydique, a été utilisé un diglycidyl éther du bisphénol A présentant un poids équivalent en époxyde inférieur à 500.

13. Procédé selon l'une des revendications 9 à 12, caractérisé par le fait que les composés choisis comme composant (B) présentent des masses moléculaires de 100 à 3500, de préférence, de 350 à 1000.

14. Procédé selon l'une des revendications 9 à 13, caractérisé par le fait que la fraction de la quantité utilisée en composant (B) s'élevé à 5—60 pour cent en poids, par rapport à la somme des matières de départ utilisées pour la conduite de la polyaddition et du composant (B) et a est choisie en fonction de la masse moléculaire du composant (B), de sorte que le rapport molaire entre le produit de polyaddition à modifier et le composant (B) s'élevé à 4:1 à 0,8:1, de préférence, à 2:1.

15. Procédé selon l'une des revendications 9 à 14, caractérisé par le fait que, comme composant (B), a été utilisé un polyphénol ou un mélange de polyphénols de la formule générale (I):

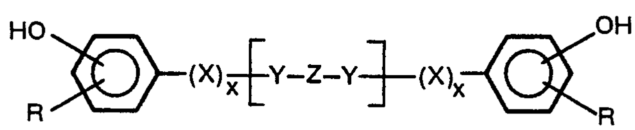 (I)

dans laquelle:

X = alkylène, arylène, alkarylène,
O, O-alkylène, O-arylène, O-alkarylène
S, S-alkylène, S-arylène, S-alkarylène
CO, CO-alkylène, CO-arylène, CO-alkarylène
NH, NH-alkylène, NH-arylène, NH-alkarylène

x = 0 ou 1

Y = X, 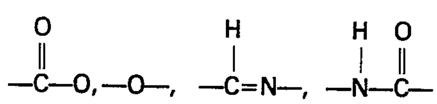

Z = alkylène, reste alkylène à base de polyesters, polyéthers, polyamides, polycarbonates, polyuréthannes
R = H, $CH_3$, alkyle, —O, —$CH_3$, O-alkyle, —$NO_2$, $NR'_2$, —NR' R'', —NHCOR'''.

16. Procédé pour le revêtement électrophorétique d'un substrat conducteur de l'électricité, monté en cathode, dans un bain aqueux, qui contient, en dehors des additifs usuels, des liants cationiques, diluables dans l'eau, ou bien qui ont été rendus auto-réticulables par réaction, ou bien qui peuvent être réticulés par des agents de réticulation présents dans le bain, caractérisé par le fait que les liants ont été préparés par

(a) une polyaddition amorcée par un amorceur réagissant de façon monofonctionnelle qui porte soit un groupe OH alcoolique, soit un groupe OH phénolique, soit un groupe SH, conduite à une température de 100 à 195°C, le cas échéant en présence d'un catalyseur, d'un composé diépoxydique et/ou d'un mélange de composés diépoxydiques, le cas échéant conjointement avec au moins un composé monoépoxydique, pour donner une résine époxydique, dans laquelle le composé diépoxydique et l'amorceur sont incorporés dans un rapport molaire de >2:1 à 10:1, puis

(b) une modification de la résine époxydique obtenue en (a) par:

(A) une amine primaire et/secondaire ou ses sels et/ou le sel d'une amine tertiaire, un mélange sulfure/acide ou phosphine/acide ou un mélange de ces composés, de même que, le cas échéant, par

(B) un alcool polyfonctionnel, un acide polycarboxylique, une polyamine, un polysulfure, un polyphénol ou un mélange de ces composés, et le cas échéant,

(c) une protonation par un acide soluble dans l'eau.

## Claims

1. A water-dilutable binder for cationic electrocoating finishes based on modified epoxy resins containing ammonium, sulfonium and/or phosphonium groups, wherein the binders are prepared by

a) a polyaddition of a di-epoxide compound and/or a mixture of di-epoxide compounds, together with at least one monoepoxide compound if desired, carried out at 100 to 195°C, if desired in the presence of a catalyst, initiated by a monofunctionally reacting initiator carrying either an alcoholic OH group, a phenolic OH group or an SH group, to form an epoxy resin in which the di-epoxide compound and the initiator are incorporated in a molar ratio of >2:1 to 10:1, and by a subsequent

b) modification of the epoxy resin obtained from a) with

A) a primary and/or secondary amine or their salts and/or the salt of a tertiary amine, a sulfide/acid mixture of phosphine/acid mixture or a mixture of these compounds, and, as if desired, with

B) a polyfunctional alcohol, a polycarboxylic acid, a polyamine, a polysulfide, a polyphenol or a mixture of these compounds and, if desired,

c) by protonization with a water-soluble acid.

2. A binder as claimed in claim 1, wherein the initiator is a compound of the formula

$$R^1—OH$$

in which $R^1$ can have the following meaning

$R^1$ = alkyl (preferably of 1 to 20 carbon atoms, particularly preferably methyl, ethyl, (iso)-propyl, (iso)-butyl, (iso)-amyl, 2-ethylbutyl, 2-ethylhexyl, isononyl, isodecyl, isotridecyl, isohexadecyl, isooctadecyl, neopentyl, 3,7-dimethyl-3-octyl, 3-cyclohexylpropyl, 2,4-dimethyl-3-pentyl).
= alkenyl (particularly preferably 1-buten-3-yl, 2-methylbut-3-en-2-yl, 3-methylpent-1-en-3-yl
= $R^2$—X—$R^3$—, in which
$R^2$ = alkyl (of 1 to 6 carbon atoms, preferably methyl, ethyl, butyl or hexyl) or phenyl
$R^3$ = $CH_2CH_2—(OCH_2—CH_2)n—$ with n = 0 to 10, especially 0, 1 and 2, propyl or butyl
X = O or S
= cycloalkyl, particularly preferably cyclohexyl, preferably 4-tert-butylcyclohexyl
= aryl, particularly preferably

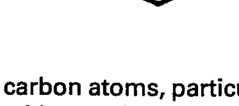

in which
$R^4$ = H, alkyl (preferably of 1 to 20 carbon atoms, particularly preferably tert-butyl, nonyl and dodecyl)
$R^4$ = $R^5$—O— (preferably in the para-position to the phenolic OH group) in which
$R^5$ = alkyl (preferably of 1 to 10 carbon atoms, particularly preferably methyl)
$R^1$ = aralkyl, preferably benzyl, 4-methylbenzyl, phenylethyl, 2-phenylprop-1-yl
or a compound of the formula $R^6$—SH, in which $R_6$ can have the following meaning
$R^6$ = alkyl (preferably of 1 to 20 carbon atoms, particularly preferably n-butyl and dodecyl)
= $R^7$—$OOC(CH_2)_n$— in which n = 1, 2 and $R^7$ = alkyl radical of 1 to 8 carbon atoms (preferably butyl or 2-ethylhexyl)
= cycloalkyl, particularly preferably cyclohexyl

= aryl, particularly preferably phenyl
= aralkyl, particularly preferably benzyl
or a mixture of these compounds.

3. A binder as claimed in claims 1 and 2, wherein diepoxide compounds and, if desired, mono-epoxide compounds of an epoxide equivalent weight below 500 are used.

4. A binder as claimed in claims 1 to 3, wherein a bis-phenol A diglycidyl ether of an epoxide equivalent weight below 500 is used as the di-epoxide compound.

5. A binder as claimed in claims 1 to 4, wherein the compounds listed as component B have molecular weights of from 100 to 3500, preferably from 350 to 1000.

6. A binder as claimed in claims 1 to 5, wherein the proportion of the component B used amounted to 5—60% by weight, based on the sum of the starting materials used for carrying out the polyaddition and of component B, and chosen in relation to the molecular weight of component B so that the molar ratio between the modified polyaddition product and the component B amounted to from 4:1 to 0.8:1, preferably 2:1.

7. A binder as claimed in claims 1 to 6, wherein a polyphenol or a mixture of polyphenols of the formula (I) was used as component B.

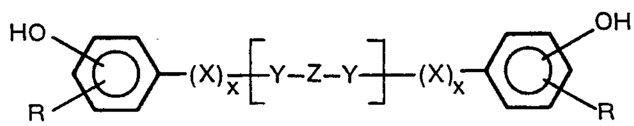

(I)

in which

X = alkylene, arylene, alkarylene
O, O-alkylene, O-arylene, O-alkarylene
S, S-alkylene, S-arylene, S-alkarylene
CO, CO-alkylene, CO-arylene, CO-alkarylene
NH, NH-alkylene, NH-arylene, NH-alkarylene

x = 0 or 1

Y = X, 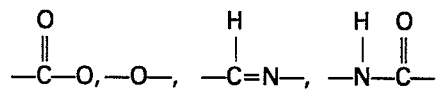

Z = alkylene or an alkylene radical based on polyesters, polyethers, polyamides, polycarbonates or polyurethanes

R = H, $CH_3$, alkyl, —O, —$CH_3$, O-alkyl, —$NO_2$, $NR'_2$, —NR' R'', —NHCOR'''

8. A binder as claimed in claims 1 to 7, wherein the binder has become self-crosslinkable by reaction, and/or contains a crosslinking agent.

9. A process for the preparation of water-dilutable binders for cationic electrocoating finishes based on modified epoxy resins containing ammonium, sulfonium and/or phosphonium groups, wherein a di-epoxide compound and/or a mixture of di-epoxide compounds, together with at least one mono-epoxide compound if desired, is reacted by a polyaddition reaction carried out at 100 to 195°C, if desired in the presence of a catalyst, and initiated by a monofunctionally reacting initiator carrying either an alcoholic OH group, a phenolic OH group or an SH group to form an epoxy resin in which the di-epoxide compound and the initiator are incorporated in a molar ratio of >2:1 to 10:1, and the epoxy resin obtained in this manner is subsequently modified by reaction with

A) primary and/or secondary amines or their salts and/or the salt of a tertiary amine, a sulfide/acid mixture or phosphine/acid mixture or a mixture of these compounds, and, if desired, with

B) a polyfunctional alcohol, a polycarboxylic acid, a polaymine, a polysulfide, a polyphenol or a mixture of these compounds,

and the water-dilutability is obtained, if desired, by protonization with a water-soluble acid.

10. A process as claimed in claim 9, wherein the initiator is a compound of the formula

$$R^1—OH$$

in which $R^1$ can have the following meaning

$R^1$ = alkyl (preferably of 1 to 20 carbon atoms, particularly preferably methyl, ethyl, (iso)-propyl, (iso)-butyl, (iso)-amyl, 2-ethylbutyl, 2-ethylhexyl, isononyl, isodecyl, isotridecyl, isohexadecyl, isooctadecyl, neopentyl, 3,7-dimethyl-3-octyl, 3-cyclohexylpropyl, 2,4-dimethyl-3-pentyl).
= alkenyl (particularly preferably 1-buten-3-yl, 2-methylbut-3-en-2-yl, 3-methylpent-1-en-3-yl
= $R^2$—X—$R^3$—, in which
$R^2$ = alkyl (of 1 to 6 carbon atoms, preferably methyl, ethyl, butyl or hexyl) or phenyl
$R^3$ = $CH_2CH_2$—($OCH_2$—$CH_2$)n— with n = 0 bis 10, especially 0, 1 and 2, propyl or butyl
X = O or S

= cycloalkyl, particularly preferably cyclohexyl, preferably 4-tert-butylcyclohexyl
= aryl, particularly preferably

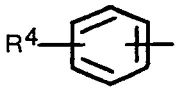

in which
$R^4$ = H, alkyl (preferably of 1 to 20 carbon atoms, particularly preferably tert-butyl, nonyl and dodecyl)
$R^4$ = $R^5$—O— (preferably in the para-position to the phenolic OH group) in which $R^5$ = alkyl (preferably of 1 to 10 carbon atoms, particularly preferably methyl)
$R^1$ = aralkyl, preferably benzyl, 4-methylbenzyl, phenylethyl, 2-phenylprop-1-yl
or a compound of the formula $R^6$—SH, in which $R_6$ can have the following meaning
$R^6$ = alkyl (preferably of 1 to 20 carbon atoms, particularly preferably n-butyl and dodecyl)
= $R^7$—$OOC(CH_2)_n$— in which n = 1 or 2 and $R^7$ = alkyl radical of 1 to 8 carbon atoms (preferably butyl or 2-ethylhexyl)
= cycloalkyl, particularly preferably cyclohexyl
= aryl, particularly preferably phenyl
= aralkyl, particularly preferably benzyl
or a mixture of these compounds.

11. A process as claimed in claims 9 and 10, wherein epoxide compounds and, if desired, monoepoxide compounds of an epoxide equivalent weight below 500 are used.

12. A process as claimed in claims 9 to 11, wherein a bisphenol A diglycidyl ether of an epoxide equivalent weight below 500 is used as the di-epoxide compound.

13. A process as claimed in claims 9 to 12, wherein the compounds listed as component B have molecular weights of from 100 to 3500, preferably from 350 to 1000.

14. A process as claimed in claims 9 to 13, wherein the proportion of the component B used amounts to 5—60% by weight, based on the sum of the starting materials used for carrying out the polyaddition and of component B, and is chosen in relation to the molecular weight of component B so that the molar ratio between the polyaddition product to be modified and the component B is 4:1 to 0.8:1, preferably 2:1.

15. A process as claimed in claims 9 to 14, wherein a polyphenol or a mixture of polyphenols of the formula (I) was used as component B.

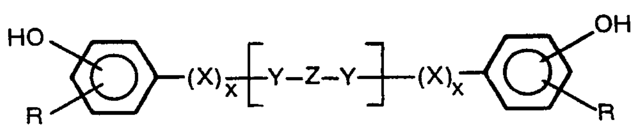

(I)

in which
X = alkylene, arylene, alkarylene
O, O-alkylene, O-arylene, O-alkarylene
S, S-alkylene, S-arylene, S-alkarylene
CO, CO-alkylene, CO-arylene, CO-alkarylene
NH, NH-alkylene, NH-arylene, NH-alkarylene
x = 0 or 1

Y = X, 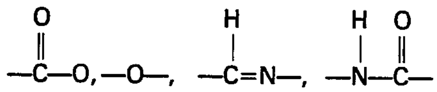

Z = alkylene or an alkylene radical based on polyesters, polyethers, polyamides, polycarbonates or polyurethanes
R = H, $CH_3$, alkyl, —O, —$CH_3$, O-alkyl, —$NO_2$, $NR'_2$, —NR' R'', —NHCOR'''

16. A process for the electrophoretic coating of an electrically conducting substrate connected as cathode in an aqueous bath which contains, besides the usual additives, water-dilutable cationic binders which have either been made self-crosslinkable by reaction or can be crosslinked by crosslinking agents present in the bath, in which the binders are prepared by

a) a polyaddition of a di-epoxide compound and/or a mixture of di-epoxide compounds, together with at least one monoepoxide compound if desired, carried out at 100 to 195°C, if desired in the presence of a catalyst, initiated by a monofunctionally reacting initiator carrying either an alcoholic OH group, a phenolic OH group or an SH group, to form an epoxy resin in which the di-epoxide compound and the initiator are incorporated in a molar ratio of >2:1 to 10:1, and by a subsequent

b) modification of the epoxy resin obtained from a) with

A) a primary and/or secondary amine or their salts and/or the salt of a tertiary amine, a sulfide/acid mixture or phosphine/acid mixture or a mixture of these compounds, and, if desired, with

B) a polyfunctional alcohol, a polycarboxylic acid, a polyamine, a polysulfide, a polyphenol or a mixture of these compounds and, if desired,

c) by protonization with a water-soluble acid.